# EUROPÄISCHE PATENTSCHRIFT

(11) **EP 3 735 544 B1**
(45) Veröffentlichungstag und Bekanntmachung des Hinweises auf die Patenterteilung: **14.04.2021**
(21) Anmeldenummer: 19709399.0
(22) Anmeldetag: 27.02.2019
(51) Int. Cl.: F16H 37/08, F16H 35/00, F16H 25/04, F16H 29/02, F16H 19/00

(54) **STUFENLOSES GETRIEBE UND VERFAHREN ZUM BETREIBEN EINES STUFENLOSEN GETRIEBES**
CONTINUOUSLY VARIABLE TRANSMISSION AND METHOD FOR OPERATING A CONTINUOUSLY VARIABLE TRANSMISSION
TRANSMISSION À VARIATION CONTINUE ET PROCÉDÉ POUR FAIRE FONCTIONNER UNE TRANSMISSION À VARIATION CONTINUE

(30) Priorität: 27.02.2018 DE 102018104465
(43) Veröffentlichungstag der Anmeldung: 11.11.2020
(73) Patentinhaber: FAHRNI, Dieter Gerhard, 79804 Dogern (DE)
(72) Erfinder: FAHRNI, Dieter Gerhard, 79804 Dogern (DE)
(74) Vertreter: Mertzlufft-Paufler, Cornelius
(86) Internationale Anmeldenummer: PCT/EP2019/054833
(87) Internationale Veröffentlichungsnummer: WO 2019/166478

(56) Entgegenhaltungen:
- WO-A1-2007/062841
- FR-A- 642 742
- GB-A- 2 160 271

## Beschreibung

Die Erfindung betrifft ein stufenloses Getriebe mit einer Getriebestufe, welche eine um eine erste Drehachse rotierende antreibende Welle und eine um eine zweite Drehachse rotierende abtreibende Welle aufweist, wobei mit der antreibenden Welle eine antreibende Kurvenscheibe und mit der abtreibenden Welle eine abtreibende Kurvenscheibe gekoppelt ist und wobei die antreibende und die abtreitende Kurvenscheibe über mindestens ein Kraftübertragungsmittel miteinander bewegungsgekoppelt sind. Ferner betrifft die Erfindung ein Verfahren zum Betreiben eines stufenlosen Getriebes.

Stufenlose Getriebe der soeben beschriebenen Art sind bereits aus dem Stand der Technik bekannt. Beispielsweise existieren stufenlos verstellbare Planetengetriebe, bei denen als Kraftübertragungsmittel Kugeln verwendet werden, welche zum stufenlosen Verstellen des Übersetzungsverhältnisses verkippt werden. Solche Getriebe kommen beispielsweise bei Fahrrädern zum Einsatz.

Derartige Getriebe sind nicht schlupffrei, so dass Reibverluste entstehen, welche sich nachteilhaft auf den Wirkungsgrad des Getriebes auswirken können.

Aus der Druckschrift GB 2 160 271 A ist eine stufenloses Getriebe bekannt, mit einer Getriebestufe, welche eine um eine erste Drehachse rotierende antreibende Welle und eine um eine zweite Drehachse rotierende abtreibende Welle aufweist, wo mit der antreibenden Welle eine antreibende Kurvenscheibe und mit der abtreibenden Welle eine abtreibende Kurvenscheibe gekoppelt ist und wo die antreibende Kurvenscheibe und die abtreibende Kurvenscheibe über mindestens ein Kraftübertragungsmittel miteinander bewegungsgekoppelt sind, wobei die antreibende Kurvenscheibe und die abtreibende Kurvenscheibe jeweils eine spiralförmige Außenkontur aufweisen, die Außenkontur der antreibenden Kurvenscheibe in einer ersten Ebene, die senkrecht zu der ersten Drehachse orientiert ist, angeordnet ist und die Außenkontur der abtreibende Kurvenscheibe in einer zweiten Ebene, die senkrecht zur der zweiten Drehachse orientiert ist, angeordnet ist, wo eine Wechselvorrichtung ausgebildet ist, mit der eine Rotationsbewegung der antreibenden Welle in eine phasenversetzte Schwenkbewegung von sich korrespondierenden Kurvenscheiben umsetzbar ist und wo ein Rückwandler vorgesehen ist, der eingerichtet ist, die phasenversetzte Schwenkbewegung der sich korrespondierenden Kurvenscheiben der ersten und zweiten Ausführung der Getriebestufe zu einer Rotationsbewegung der abtreibenden Welle zu kombinieren.

Der Erfindung liegt die Aufgabe zugrunde, die Gebrauchseigenschaften eines stufenlosen Getriebes zu verbessern, insbesondere die zuvor beschriebenen Nachteile des Standes der Technik abzumildern oder zu beheben.

Zur Lösung dieser Aufgabe schlägt die Erfindung die Merkmale von Anspruch 1 vor. Insbesondere wird somit erfindungsgemäß bei einem stufenlosen Getriebe der eingangs beschriebenen Art zur Lösung der genannten Aufgabe vorgeschlagen, dass die antreibende und die abtreibende Kurvenscheibe jeweils eine spiralförmige Außenkontur aufweisen, dass die Außenkontur der antreibenden Kurvenscheibe in einer ersten Ebene, die senkrecht zu der ersten Drehachse orientiert ist, angeordnet ist und dass die Außenkontur der abtreibende Kurvenscheibe in einer zweiten Ebene, die senkrecht zur der zweiten Drehachse orientiert ist, angeordnet ist. Hierbei sind auch die Kurvenscheiben selbst vorzugsweise flach ausgebildet.

Werden Kurvenscheiben mit spiralförmiger Außenkontur verwendet, bleibt anders als bei den üblichen kreisförmigen Kurvenscheiben das Verhältnis von Bogenlänge der Außenkontur und Rotationswinkel der Kurvenscheibe nicht konstant, sondern ist veränderlich. Diese fehlende Konstanz kann ausgenutzt werden, um, worauf in dieser Schrift noch detaillierter eingegangen werden soll, ein stufenloses Einstellen einer Getriebeübersetzung zu ermöglichen. Die Kraftübertragung lässt sich hierbei schlupffrei realisieren, beispielsweise in Form eines Zahnradgetriebes oder eines Riemengetriebes.

Durch die ebene Ausgestaltung der Außenkonturen kann insbesondere die Kraftübertragung verbessert werden, da bei der Kraftübertragung das Kraftübertragungsmittel gerade ablaufen kann und beispielsweise ein Band nicht abrutschen kann.

Durch die vorgeschlagene Lösung werden daher Vorteile gegenüber dem Stand der Technik erzielt wie beispielsweise eine schlupffreie und daher verlustarme Kraftübertragung, so dass mit der Erfindung ein hoher Wirkungsgrad von stufenlosen Getrieben erzielt werden kann. Hierdurch werden die Gebrauchseigenschaften von stufenlosen Getrieben verbessert.

Erfindungsgemäß kann das stufenlose Getriebe genau eine Getriebestufe aufweisen oder auch mehr als eine Getriebestufe. Weist das stufenlose Getriebe genau eine Getriebestufe auf, so kann auch gesagt werden, dass das stufenlose Getriebe von dieser Getriebestufe gebildet ist. Soweit somit im Folgenden Merkmale eines stufenlosen Getriebes beschrieben werden und diese Merkmale nicht notwendigerweise eine Mehrzahl von Getriebestufen voraussetzen, können diese Merkmale auch als Merkmale der Getriebestufe selbst angesehen werden.

Bei einer vorteilhaften Ausgestaltung des stufenlosen Getriebes kann vorgesehen sein, dass die erste Drehachse und die zweite Drehachse parallel sind oder miteinander übereinstimmen. Ferner kann vorgesehen sein, dass die erste Ebene und die zweite Ebene parallel sind oder miteinander übereinstimmen. Besonders vorteilhaft kann es sein, wenn die Außenkonturen beider Kurvenscheiben in einer Ebene liegen. Die vorbenannten Ausgestaltungen haben den Vorteil, dass eine besonders effektive Kraftübertragung ermöglicht wird. Ausgestaltungen dieser Art können den Vorteil haben, dass beispielsweise Scherkräfte eines kraftübertragenden Bandes auf den Außenkonturen der Kurvenscheiben nicht auftreten, so dass ein seitliches Abrutschen des Bandes verhinderbar ist.

Bei einer weiteren vorteilhaften Ausgestaltung des stufenlosen Getriebes von möglicherweise besonders hoher eigenständiger erfinderischer Qualität kann vorgesehen sein, dass das Kraftübertragungsmittel bandförmig ausgebildet ist. Bevorzugt ist das Kraftübertragungsmittel ein Band, ein Riemen oder eine Kette. Derartige bandförmige Kraftübertragungsmittel eignen sich in besonderem Maße, bei von einer Kreisform abweichenden spiralförmigen Kurvenscheiben eine Kraftübertragung mit hohem Wirkungsgrad bei hoher Variabilität eines Übersetzungsverhältnisses zu erzielen.

Alternativ kann jedoch auch vorgesehen sein, dass das Kraftübertragungsmittel von einer Verzahnung der Kurvenscheiben gebildet ist. Hierbei sind die Kurvenscheiben bevorzugt als spiralförmige Zahnradabschnitte ausgebildet. Soweit mehr als ein Kraftübertragungsmittel ausgebildet ist, können auch bandförmige und zahnförmige Kraftübertragungsmittel miteinander kombiniert sein.

Bei einer weiteren vorteilhaften Ausgestaltung des stufenlosen Getriebes kann vorgesehen sein, dass die spiralförmigen Außenkonturen der antreibenden und der abtreibenden Kurvenscheiben gleichgerichtet sind. Dies ermöglicht besonders einfache stufenlose Getriebe, da insbesondere bei einer gleichen Ausrichtung der Kurvenscheiben Getriebe realisiert werden kann, ohne dass weitere Getriebestufen vor- oder nachgeschaltet werden müssten. Ob die Kurvenscheiben gleichgerichtet oder entgegengerichtet sind, ist funktional zu verstehen. Eine Gleichrichtung liegt vor, wenn bei einer Erhöhung des Radius der einen, einen Schwenk ausführenden Kurvenscheibe der Radius der anderen Kurvenscheibe ebenfalls anwächst. Dies kann beispielsweise erreicht werden, wenn der Umlaufsinn der Spiralöffnungen beider Kurvenscheiben gleich orientiert ist und die mit dem Kraftübertragungsmittel bewirkte Bewegungskopplung der beiden Kurvenscheiben jeweils einen Schwenk mit gleichem Drehsinn bewirkt. Eine funktionale Gleichrichtung der Kurvenscheiben kann auch erreicht werden, wenn der Umlaufsinn der Spiralöffnungen beider Kurvenscheiben entgegengesetzt orientiert ist und die mit dem Kraftübertragungsmittel bewirkte Bewegungskopplung der beiden Kurvenscheiben jeweils einen Schwenk mit entgegengesetzten Drehsinn bewirkt.

Entgegengerichtet sind die Kurvenscheiben hingegen, wenn bei Zunahme des Radius der einen Kurvenscheibe der Radius der anderen Kurvenscheibe abnimmt. Eine Entgegenrichtung der Kurvenscheiben kann in analoger Weise wie zuvor bei der Gleichrichtung beschrieben auf unterschiedliche Weise erreicht werden, also insbesondere durch Verwendung von Kurvenscheiben mit gleichem Umlaufsinn, und umkehrender Drehkopplung oder mit entgegengesetztem Umlaufsinn jedoch gleichgesinnter Drehkopplung.

Bei den zuvor beschriebenen Getrieben mit gleichgerichteten Kurvenscheiben kann in besonders vorteilhafter Weise vorgesehen sein, dass die Außenkontur der antreibenden und/oder der abtreibenden Welle derart geformt ist oder sind, dass ein Übersetzungsverhältnis der Getriebestufe bei einer Bewegung der an- und abtreibenden Kurvenscheibe konstant bleibt. Alternativ oder zugleich kann vorgesehen sein, dass die Außenkontur der antreibenden und/oder der abtreibenden Welle derart geformt ist, dass ein Verhältnis der Winkelgeschwindigkeiten der an- und abtreibenden Kurvenscheiben konstant bleibt. Weiterhin kann alternativ oder auch zugleich vorgesehen sein, dass die Außenkontur der antreibenden und/oder der abtreibenden Welle derart geformt ist, dass ein Verhältnis eines an der antreibenden Welle anliegenden Drehmoments und eines an der abtreibenden Welle bewirkten Drehmoments konstant bleibt. Diese Ausgestaltungen können vorteilhaft sein, da hierdurch beispielsweise erreichbar ist, dass beim Betrieb eines Fahrrads die Trittfrequenz linear mit der Fahrgeschwindigkeit skaliert, wodurch ein angenehmes Fahrgefühl erreicht wird.

Bei einer weiteren vorteilhaften Ausgestaltung des stufenlosen Getriebes kann vorgesehen sein, dass die spiralförmigen Außenkonturen der antreibenden und der abtreibenden Kurvenscheiben entgegengerichtet sind. Hierdurch kann erreicht werden, dass beim Betrieb des Getriebes ein sich hochgradig änderndes Übersetzungsverhältnis von der antreibenden zur abtreibenden Welle entsteht. Wird dieses nicht-lineare Verhalten in einer nachgelagerten Getriebestufe wieder rückgängig gemacht, können sehr hohe Übersetzungsverhältnisse erreicht werden, welche beim Betrieb konstant oder zumindest nahezu konstant bleiben.

Bei solchen entgegengerichteten Kurvenscheiben kann in vorteilhafter Weise vorgesehen sein, dass die Außenkontur der antreibenden und/oder der abtreibenden Welle derart geformt ist oder sind, dass ein Übersetzungsverhältnis der Getriebestufe bei einer Bewegung der antreibenden Kurvenscheibe mit konstanter Winkelgeschwindigkeit exponentiell verläuft. Alternativ oder zusätzlich kann vorgesehen sein, dass die Außenkontur der antreibenden und/oder der abtreibenden Welle derart geformt ist, dass ein Verhältnis der Winkelgeschwindigkeiten der an- und abtreibenden Kurvenscheiben exponentiell verläuft. Ferner kann alternativ oder zugleich vorgesehen sein, dass die Außenkontur der antreibenden und/oder der abtreibenden Welle derart geformt ist, dass ein Verhältnis eines an der antreibenden Welle anliegenden Drehmoments und eines an der abtreibenden Welle bewirkten Drehmoments exponentiell verläuft. Derartige Ausgestaltungen können beispielsweise den Vorteil haben, dass mit ihnen bei hoher Effizienz ein genauer Rundlauf erreicht werden kann.

Bei einer weiteren vorteilhaften Ausgestaltung des stufenlosen Getriebes kann vorgesehen sein, dass die spiralförmigen Außenkonturen jeweils eine mathematische Kurve beschreiben, deren radialer Abstand von einer jeweiligen Spiralachse exponentiell in der Bogenlänge der Kurve und/oder exponentiell in einem Winkel um die jeweilige Spiralachse ist. Bevorzugt sind hierbei die antreibende und die abtreibende Kurvenscheibe identisch ausgebildet. Mit derartigen Kurvenscheiben kann je nach Einsatz als im Kraftfluss erste Kurvenscheibe, Zwischenscheibe oder letzte Kurvenscheibe ein guter Rundlauf ermöglicht werden. Allerdings können auch andere, von dem Fachmann ermittelte Geometrien zum Einsatz kommen, welche je nach konkreter Ausgestaltung des Getriebes einen exakten Rundlauf bei konstantem Übersetzungsverhältnis erlauben.

Eine identische Ausbildung der an- und abtreibenden Kurvenscheiben derselben Getriebestufe oder auch über Getriebestufen hinweg kann auch im Allgemeinen im Rahmen der hier beschriebenen Erfindung vorteilhaft sein, also auch im Zusammenhang mit anderen Ausgestaltungen der Erfindung.

Bei einer weiteren vorteilhaften Ausgestaltung des stufenlosen Getriebes kann vorgesehen sein, dass die Form der spiralförmigen Außenkonturen der beiden Kurvenscheiben wie folgt beschrieben konstruiert ist. Bei einer ersten der beiden Kurvenscheiben, bei der es sich um die an- oder die abtreibende Kurvenscheibe handeln kann, wird unter konstanter Winkelteilung bei einem frei gewählten Startradius der Wert des nachfolgenden Radius exponentiell erhöht. Der Endradius wird wie gewünscht gewählt. Die zweite der beiden Kurvenscheiben startet mit einem gewählten Radius. Nun werden die auf der ersten Kurvenscheibe entstandenen Teilungen, die Abstände auf der Lauffläche, auf der zweiten Kurvenscheibe aufgetragen. Der Folgeradius wird nun mit demselben Wert exponentiell gemindert, mit dem er bei der ersten Kurvenscheibe erhöht wurde. Bei der Konstruktion ist zu beachten, dass hierbei stets dieselben Spiralpunkte der beiden Kurvenscheiben aufeinandertreffen. Das heißt, die Kurvenscheiben dürfen nicht gegeneinander verdreht werden und weisen dieselbe Lauffläche auf. Die so konstruierten Kurvenscheiben können bei entsprechender Bewegungskopplung die vorteilhafte Eigenschaft aufweisen, dass, wenn eine der beiden Kurvenscheiben gleichförmig gedreht wird, die jeweils andere Kurvenscheibe exponentiell verlangsamt oder beschleunigt wird.

Bei einer weiteren vorteilhaften Ausgestaltung des stufenlosen Getriebes kann vorgesehen sein, dass die Form der spiralförmigen Außenkonturen der beiden Kurvenscheiben wie zuvor beschrieben konstruiert ist, wobei allerdings im Unterschied zu der vorangehend beschriebenen Ausführungsform bei der ersten Kurvenscheibe eine exponentielle Erhöhung nicht unter konstanter Winkelteilung erfolgt, sondern unter gleichmäßiger Teilung der Lauffläche. Die Laufflächen der beiden Kurvenscheiben sind dabei bevorzugt unterschiedlich lang. Dies kann zweckmäßig sein, wenn durch Verändern des Achsabstands oder durch eine Umlenkung des Riemens unterschiedliche Bereiche der Spiralen genutzt werden können.

Bei einer weiteren vorteilhaften Ausgestaltung des stufenlosen Getriebes kann vorgesehen sein, dass die Form der spiralförmigen Außenkonturen der beiden Kurvenscheiben wie folgt beschrieben konstruiert ist. Es wird zunächst von einer ersten Kurvenscheibe mit einer spiralförmigen Außenkontur B und einer zweiten Kurvenscheibe mit einer Außenkontur C ausgegangen, wobei die beiden Kurvenscheiben einen Achsabstand A aufweisen. Die Form der Außenkonturen B und C kann insbesondere derart ausgebildet sein wie zuvor bereits beschrieben worden ist. Ausgehend von diesen Startbedingungen werden nun neue Radien der Außenkonturen für beide Kurvenscheiben konstruiert. Der Radius der Außenkontur E der zweiten Kurvenscheibe wird berechnet nach der Formel E = (A/(B+C))*B. Der Radius der Außenkontur D der ersten Kurvenscheibe wird sodann berechnet nach der Formel D = A - E.

Bei einer weiteren vorteilhaften Ausgestaltung des stufenlosen Getriebes kann vorgesehen sein, dass die Außenkontur der antreibenden Kurvenscheibe und/oder die Außenkontur der abtreibenden Kurvenscheibe derart geformt ist oder sind, dass ein Übersetzungsverhältnis der Getriebestufe bei einer Bewegung der antreibenden Kurvenscheibe mit konstanter Winkelgeschwindigkeit linear verläuft. Alternativ oder zusätzlich kann vorgesehen sein, dass die Außenkontur der antreibenden Kurvenscheibe und/oder die Außenkontur der abtreibenden Kurvenscheibe derart geformt ist, dass ein Verhältnis der Winkelgeschwindigkeiten der an- und abtreibenden Kurvenscheiben linear verläuft. Ferner kann alternativ oder zusätzlich vorgesehen sein, dass die Außenkontur der antreibenden Kurvenscheibe und/oder die Außenkontur der abtreibenden Kurvenscheibe derart geformt ist, dass ein Verhältnis eines an der antreibenden Welle anliegenden Drehmoments und eines an der abtreibenden Welle bewirkten Drehmoments linear verläuft. Solche Ausgestaltungen können vorteilhaft sein, da sie den Anwendungsbereich des stufenlosen Getriebes erweitert, wie beispielsweise die folgende Ausgestaltung der Erfindung zeigt.

So kann zur Schaffung eines Getriebes, bei dem das Übersetzungsverhältnis stufenlos von einem positiven Bereich in einen negativen Bereich und umgekehrt einstellbar ist, bei einer weiteren vorteilhaften Ausgestaltung des stufenlosen Getriebes vorgesehen sein, dass eine Differenzvorrichtung ausgebildet ist, mit der eine Bewegung der abtreibenden Kurvenscheibe und eine Bewegung einer abtreibenden nebengelagerten Kurvenscheibe linear überlagerbar sind oder überlagert werden. Bevorzugt ist mit der Differenzvorrichtung ein linear variierender Bewegungsverlauf der abtreibenden Kurvenscheibe durch einen linear variierender Bewegungsverlauf der abtreibenden nebengelagerten Kurvenscheibe kompensierbar oder er wird auf diese Weise kompensiert.

Bei einer solchen Ausgestaltung der Erfindung können insbesondere die zuvor als letztes beschriebenen Kurvenscheiben mit linearem Antwortverhalten verwendet werden. Solche Kurvenscheiben mit linearem Antwortverhalten können für die an- und abtreibenden Kurvenscheiben und/oder für die an- und abtreibenden nebengelagerten Kurvenscheiben verwendet werden. Allerdings könnte es dann vorteilhaft sein, wenn die Eingangswelle auf Antriebsseite drehfest gekoppelt ist.

Alternativ können die abtreibende und/oder die abtreibende nebengelagerte Kurvenscheibe auch kreisförmig ausgebildet sein. Dann sollten allerdings Mittel ausgebildet sein, durch die bei konstanter Drehung der Eingangswelle die entsprechende antreibende Kurvenscheibe zu einer linear variierenden Rotation angetrieben wird.

Das Übersetzungsverhältnis kann nun dadurch stufenlos eingestellt werden, dass der Arbeitsschwenk der Kurvenscheiben und/oder der nebengelagerten Kurvenscheiben verändert wird, indem die Kurvenscheiben und/oder die nebengelagerten Kurvenscheiben weitergedreht werden, so dass der Schwenkbereich geändert wird. Hierdurch ist ein Vorwärts- und Rückwärtsantrieb möglich, aber auch ein Stillstand.

Bei der Differenzvorrichtung kann es sich beispielsweise um ein Differentialgetriebe handeln, welches vorzugsweise als Planetengetriebe ausgebildet ist.

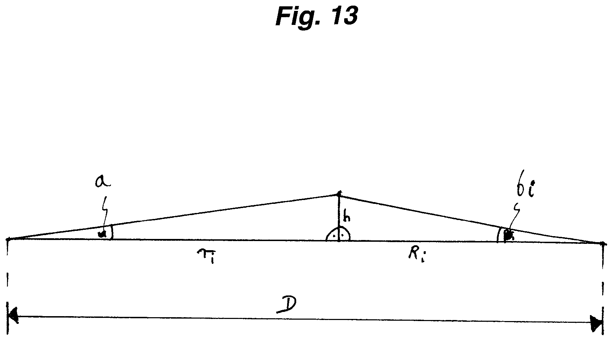

Bei einer weiteren vorteilhaften Ausgestaltung des stufenlosen Getriebes kann vorgesehen sein, dass die Formen der spiralförmigen Außenkonturen der beiden Kurvenscheiben, deren Drehpunkte einen konstanten Abstand von D aufweisen, iterativ wie folgt beschrieben und in Fig. 13 illustriert konstruiert sind. Zunächst wird ein kleiner Winkel a gewählt. Je kleiner a gewählt wird desto genauer entspricht das Resultat dem idealerweise Gewollten. Weiter wird ein initialer Winkel b0 gewählt, der von Iteration zu Iteration linear um einen Wert c erhöht wird: bi = b0 + i*c. Nun werden iterativ die Radien ri der antreibenden Kurvenscheibe und Ri der abtreibenden Kurvenscheibe berechnet, wobei gefordert wird, dass die Summe der Radien dem Abstand D entspricht: ri + Ri = D. Wie in Fig. 13 ersichtlich, werden zur Konstruktion zwei rechtwinklige Dreiecke verwendet, welche bereits durch zwei Parameter hinreichend bestimmt sind. Da beide Dreiecke die gleiche Höhe h aufweisen, sind die Dreiecke bereits durch Vorgabe von a, bi und D hinreichend bestimmt. Daraus lassen sich sodann die Radien ri und Ri eindeutig berechnen. Sind nun ri und Ri berechnet, werden die Kurvenscheiben wie folgt konstruiert. Für die antreibende Kurvenscheibe wird deren Anfangsradius auf r0 festgesetzt. Sodann wird der Radius Schritt um Schritt gemäß den berechneten Werten r1, r2, r3, etc. erhöht. Dabei wird von Schritt zu Schritt die Außenkontur jeweils um einen Wert h fortgesetzt. Entsprechend wird die abtreibende Kurvenscheibe konstruiert, wobei als Anfangsradius R0 gewählt wird und die Radien gemäß den berechneten Werten R1, R2, R3, etc. erhöht werden. Die so konstruierten Kurvenscheiben können bei entsprechender Bewegungskopplung die vorteilhafte Eigenschaft aufweisen, dass, wenn eine der beiden Kurvenscheiben gleichförmig gedreht wird, die jeweils andere Kurvenscheibe linear verlangsamt oder beschleunigt wird.

Weitere Anwendungen des stufenlosen Getriebes werden ermöglicht, wenn vorgesehen ist, dass die spiralförmigen Außenkonturen jeweils eine mathematische Kurve beschreiben, deren radialer Abstand von einer jeweiligen Spiralachse durch eine mathematische Funktion beschrieben ist, deren erste Ableitung nach der Bogenlänge der Kurve oder nach dem Winkel um die jeweilige Spiralachse monoton fallend ist. Diese Eigenschaft weisen beispielsweise die Kurvenscheiben auf, welche so konstruiert sind wie zuvor beschrieben und in Fig. 13 näher erläutert.

Bei einer weiteren vorteilhaften Ausgestaltung des stufenlosen Getriebes kann vorgesehen sein, dass die Getriebestufe Mittel umfasst, mit denen ein auf der Außenkontur der antreibenden Kurvenscheibe ausgebildeter, fortschreitender Kraftangriffspunkt für das Kraftübertragungsmittel und ein auf der Außenkontur der abtreibenden Kurvenscheibe ausgebildeter, fortschreitender Kraftangriffspunkt für das Kraftübertragungsmittel relativ zueinander bewegbar sind. Auf diesem Weg wird ermöglicht, das Übersetzungsverhältnis zu flexibel variieren.

Um eine besonders einfache flexible Einstellmöglichkeit des Übersetzungsverhältnisses zu ermöglichen, kann bei einer weiteren vorteilhaften Ausgestaltung des stufenlosen Getriebes vorgesehen sein, dass die antreibende Kurvenscheibe und die abtreibende Kurvenscheibe in einem Achsabstand zueinander, vorzugsweise parallel, beabstandet angeordnet sind, wobei der Achsabstand veränderlich ist. Zur Änderung des Achsabstands können Mittel, insbesondere im zuvor beschriebenen Sinn, ausgebildet sein.

Das Übersetzungsverhältnis ist in vorteilhafter Weise einstellbar bei einer weiteren Ausgestaltung des stufenlosen Getriebes, bei dem vorgesehen ist, dass zwischen der antreibenden und der abtreibenden Kurvenscheibe eine bewegbare Umlenkrolle angeordnet ist, mit der eine Länge eines kraftübertragenden Abschnitts eines oder des bandförmigen Kraftübertragungsmittels veränderbar ist. Bei der Umlenkrolle kann handelt es sich bevorzugt um ein Mittel im bereits zuvor genannten Sinne.

Erfindugsgemäß ist die Getriebestufe doppelt ausgeführt. Die doppelte Ausführung der Getriebestufe ermöglicht einen Rundlauf von hoher Qualität während des kraftumsetzenden Betriebs. Erfindugsgemäß sind die Kurvenscheiben einer ersten Ausführung der Getriebestufe im Betrieb phasenversetzt zu den Kurvenscheiben einer zweiten Ausführung der Getriebestufe schwenkbar. Hierdurch wird ermöglicht, dass im Betrieb immer eine Kurvenscheibe zur Kraftübertragung verwendbar ist, da hierdurch genügend Zeit verbleibt, die andere Kurvenscheibe wieder in einen Ausgangszustand zu schwenken, von dem aus sie die Kraftübertragung erneut übernehmen kann. Die Phasenversetzung ist vorzugsweise derart, dass die Kurvenscheiben alternierend und/oder um eine halbe Phase versetzt schwenkbar sind.

Erfindugsgemäß ist eine Wechselvorrichtung ausgebildet, mit der eine Rotationsbewegung einer Eingangswelle in eine phasenversetzte, vorzugsweise alternierende und/oder um eine halbe Phase versetzte, Schwenkbewegung von sich korrespondierenden Kurvenscheiben der ersten und zweiten Ausführung der Getriebestufe umsetzbar ist oder umgesetzt wird. Bevorzugt ist die Eingangswelle eine der antreibenden Wellen. Bevorzugt ist das Getriebe ferner derart eingerichtet, dass die eine Ausführung der Getriebestufe in einen Ausgangszustand lastfrei zurückgeholt wird, während die andere Ausführung der Getriebestufe eine Kraftübertragung auf die abtreibende Welle bewirkt. Hierzu kann beispielsweise jeweils eine Kupplung vorgesehen sein, insbesondere ein Freilauf zwischen abtreibender Kurvenscheibe und abtreibender Welle. Ferner kann auch vorgesehen sein, dass ein zeitlicher Überlapp besteht, während dessen beide Ausführungen der Getriebestufe eine Kraftübertragung bewirken. Durch diese Ausgestaltungen der Erfindung ist insbesondere ein unterbrechungsfreier kraftübertragender Betrieb des Getriebes erreichbar.

Erfindugsgemäß ist ein Rückwandler vorgesehen, der eingerichtet ist, die phasenversetzte, vorzugsweise alternierende, Schwenkbewegung der sich korrespondierenden Kurvenscheiben der ersten und zweiten Ausführung der Getriebestufe zu einer Rotationsbewegung der abtreibenden Welle zu kombinieren. Bevorzugt weist der Rückwandler für jede Ausführung der Getriebestufe jeweils eine Kupplung auf, die während eines Arbeitsschwenks der jeweiligen Ausführung der Getriebestufe ein Drehmoment auf die abtreibenden Welle überträgt. Dies kann beispielsweise mittels einer Freilaufkupplung erfolgen. Eine solche Ausgestaltung hat den Vorteil, dass mit ihr ein kontinuierlicher Antrieb einer Last erreichbar ist, zugleich jedoch eine stufenlose Übersetzung einstellbar ist.

Bei einer weiteren Ausgestaltung des stufenlosen Getriebes von möglicherweise besonders hoher erfinderischer Qualität kann vorgesehen sein, dass die zuvor beschriebene Getriebestufe eine erste Getriebestufe bildet und dass eine zweite Getriebestufe ausgebildet ist, welche ebenfalls erfindungsgemäß ausgebildet ist. Die zweite Getriebestufe weist somit die Merkmale auf, welche die zuvor beschriebene Getriebestufe erfindungsgemäß oder weiterbildend aufweist, ohne jedoch mit der ersten Getriebestufe identisch sein zu müssen. Es kann daher auch gesagt werden, dass die zweite Getriebestufe die Merkmale aufweist, welche der zuvor beschriebenen Getriebestufe in einem auf ein stufenloses Getriebe gerichteten Schutzansprüche zugeordnet sind. Ferner ist bei der hier beschriebenen weiteren Ausgestaltung der Erfindung vorgesehen, dass die abtreibende Kurvenscheibe der ersten Getriebestufe und die antreibende Kurvenscheibe der zweiten Getriebestufe winkeltreu zueinander gekoppelt sind. Bevorzugt ist hierbei vorgesehen, dass eine gemeinsame Dreh- oder Schwenkachse gebildet ist. Mit solchen Ausgestaltungen der Erfindung sind beispielsweise besonders große Spannen von Übersetzungsverhältnissen möglich.

Bevorzugt sind die antreibende Kurvenscheibe der ersten Getriebestufe und die abtreibende Kurvenscheibe der zweiten Getriebestufe baugleich. Weiter sind die abtreibende Kurvenscheibe der ersten Getriebestufe und die antreibende Kurvenscheibe der zweiten Getriebestufe baugleich. Ferner sind letztere zwei Kurvenscheiben bevorzugt gleichgerichtet, während die antreibenden Kurvenscheiben und die abtreibenden Kurvenscheiben auf derselben Getriebestufe jeweils bevorzugt entgegengerichtet sind. Hierdurch sind besonders flexible Übersetzungsverhältnisse gestaltbar.

Um einen Rundlauf mit hoher Qualität zu erzielen, kann bei den soeben beschriebenen Ausgestaltungen, welche zwei Getriebestufen aufweisen, vorgesehen sein, das ein Verhältnis von radialen Achsabständen von Kraftangriffspunkten zueinander konstant bleibt in dem Sinne, dass r_1a/r_1b*r_2a/r_2b = const, wobei r_xy den radialen Abstand des Angriffs- oder Haltepunkts der Kurvenscheibe xy von der Spiralachse xy bechreibt, wobei xy = xa die antreibende Kurvenscheibe der Getriebestufe x beschreibt und xy = xb die abtreibende Kurvenscheibe der Getriebestufe x.

Soweit das stufenlose Getriebe wie zuvor beschrieben zwei Getriebestufen aufweist, kann zur vorgesehen sein, dass zur Veränderung eines Übersetzungsverhältnisses des Getriebes, beispielsweise des bereits oben genannten Übersetzungsverhältnisses, die abtreibende Kurvenscheibe der ersten Getriebestufe gegenüber der antreibenden Kurvenscheibe der zweiten Getriebestufe verdrehbar ist. Dies stellt eine besonders einfache Möglichkeit dar, das Übersetzungsverhältnis zu ändern. Das Verdrehen kann beispielsweise mittels einer Verdreheinrichtung erfolgen.

Zur Lösung der genannten Aufgabe sind ferner erfindungsgemäß die Merkmale des auf ein Verfahren gerichteten nebengeordneten Anspruchs vorgesehen. Insbesondere wird zur Lösung der genannten Aufgabe somit erfindungsgemäß bei einem Verfahren der eingangs beschriebenen Art vorgeschlagen, dass eine eine Kurvenscheibe mit spiralförmiger Außenkontur aufweisende Getriebestufe doppelt ausgeführt ist, dass die beiden Getriebestufen alternierend ein- und ausgekuppelt werden und dass die jeweils ausgekuppelte Getriebestufe in einen Ausgangszustand zurückgeholt wird, während die jeweils eingekuppelte Getriebestufe eine Kraftübertragung auf eine abtreibende Welle bewirkt. Dieses Verfahren ermöglicht eine schlupffreie und verlustarme Kraftübertragung bei der Verwendung eines stufenlosen Getriebes mit spiralförmigen Kurvenscheiben. Bevorzugt ist das stufenlose Getriebe erfindungsgemäß, insbesondere wie zuvor beschrieben und/oder nach einem der auf ein stufenloses Getriebe gerichteten Schutzansprüche, ausgebildet. Das zuvor beschriebene Verfahren lässt sich besonders vorteilhaft mit derartigen Getrieben ausführen.

Die Erfindung wird nun anhand einiger weniger Ausführungsbeispiele näher beschrieben, ist jedoch nicht auf diese wenigen Ausführungsbeispiele beschränkt. Weitere Ausführungsbeispiele ergeben sich durch Kombination der Merkmale einzelner oder mehrerer Schutzansprüche untereinander und/oder mit einzelnen oder mehreren Merkmalen der Ausführungsbeispiele.

Es zeigt:
- Fig. 1: ein erfindungsgemäßes stufenloses Getriebe 1 mit einer Getriebestufe 2,
- Fig. 2: ein erfindungsgemäßes stufenloses Getriebe 1 mit zwei Getriebestufen 3 und 4,
- Fig. 3 bis Fig. 6: den Aufbau einer Wechselvorrichtung 33 eines erfindungsgemäßen stufenlosen Getriebes 1,
- Fig. 7: ein Paar von Kurvenscheiben 9, 11, durch die eine konstante Winkelgeschwindigkeit in eine linear variierende Winkelgeschwindigkeit umgesetzt wird,
- Fig. 8 bis Fig. 11: ein weiteres erfindungsgemäßes stufenloses Getriebe 1, mit dem ein positives und ein negatives Übersetzungsverhältnis einstellbar ist,
- Fig. 12: ein weiteres Paar von Kurvenscheiben 9, 11 mit linearer Umsetzung, wobei bei konstantem Eingang am Ausgang eine Richtungsänderung erfolgen kann,
- Fig. 13: Hilfsskizze zur Konstruktion von Kurvenscheiben 9, 11 mit linearer Umsetzung.

Bei der nachfolgenden Beschreibung verschiedener Ausführungsbeispiele der Erfindung erhalten in ihrer Funktion übereinstimmende Elemente auch bei abweichender Gestaltung oder Formgebung übereinstimmende Bezugszahlen.

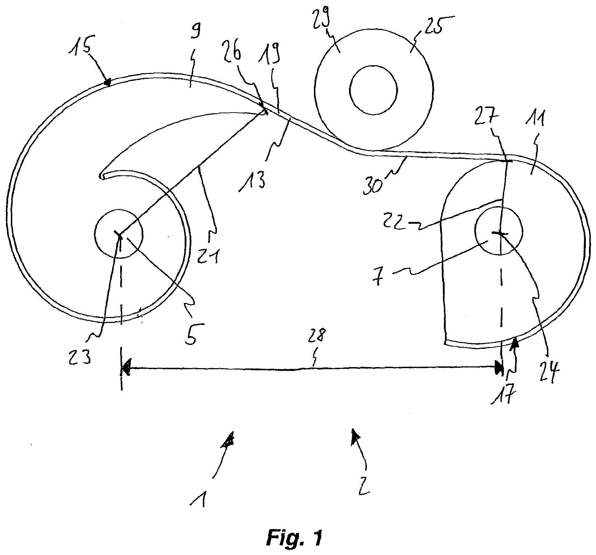

Fig. 1 zeigt ein erfindungsgemäßes stufenloses Getriebe 1 mit einer Getriebestufe 2. Das Getriebe 1 umfasst eine antreibende Kurvenscheibe 9 mit spiralförmiger Außenkontur 15 und eine abtreibende Kurvenscheibe 11, ebenfalls mit spiralförmiger Außenkontur 17. Die antreibende Kurvenscheibe 9 ist über die antreibende Welle 5 in eine Schwenk- und Drehbewegung um die Drehachse der Welle 5 versetzbar. An der Außenkontur 15 der antreibenden Kurvenscheibe 9 ist ein erstes Ende eines als Band 19 ausgebildeten Kraftübertragungsmittels 13 gehalten. Mit dem Kraftübertragungsmittel 13 sind Kräfte von der antreibenden Kurvenscheibe 9 auf die abtreibende Kurvenscheibe 11 übertragbar. Hierzu sind die beiden Kurvenscheiben 9, 11 über das Kraftübertragungsmittel 13 miteinander mechanisch gekoppelt. Hierzu wird ein zweites Ende des Kraftübertragungsmittels 13 von der abtreibenden Kurvenscheibe 11 gehalten. Wird nun die antreibende Kurvenscheibe 9 in Bewegung gesetzt, wird infolge der mechanischen Kopplung auch die abtreibende Kurvenscheibe 11 in eine Drehbewegung versetzt. Die beiden Kurvenscheiben 9, 11 sind somit bewegungsgekoppelt.

Wird das Getriebe 1 beispielsweise zum Betreiben eines Fahrrads verwendet, so kann vorgesehen sein, dass die antreibende Welle 5 mit den Pedalen gekoppelt ist und die abtreibende Welle 7 mit der kraftumsetzenden Nabe eines der beiden Räder.

Die Kurvenscheiben 9, 11 sind dabei so geformt, dass ein Übersetzungsverhältnis bei Drehung der Kurvenscheiben 9, 11 konstant bleibt. Hierzu sind die beiden Kurvenscheiben 9, 11 funktional gleichgerichtet. Hierdurch wird bewirkt, dass bei Bewegung der Kurvenscheibe 9 der Abstand 21 eines fortschreitenden Kraftübertragungspunkts 26 der antreibenden Kurvenscheibe 9 von der mit der Drehachse der Welle 5 übereinstimmenden Spiralachse 23 relativ betrachtet in dem Maße anwächst oder geringer wird, in dem auch der Abstand 22 eines fortschreitenden Kraftübertragungspunkts 27 der abtreibenden Kurvenscheibe 11 von der Spiralachse 24 anwächst oder geringer wird. Hierbei sind die Kraftübertragungspunkte 26, 27 durch den Punkt auf der jeweiligen Außenkontur 15, 17 gebildet, an dem sich das Kraftübertragungsmittel 13 von der jeweiligen Außenkontur 15, 17 löst. Zur Erzielung der Gleichrichtung der Kurvenscheiben 9, 11 weisen die Spiralöffnungen der beiden Kurvenscheiben 9, 11 einen gleichen Umlaufsinn auf und das Kraftübertragungsmittel 13 verbindet die beiden Kurvenscheiben 9, 11 in der Weise, dass eine Drehkopplung mit gleichem Drehsinn erfolgt.

Zugleich sind die Kurvenscheiben 9, 11 so geformt, dass ein Verhältnis der Winkelgeschwindigkeiten der antreibenden Kurvenscheibe 9 und der abtreibenden Kurvenscheibe 11 konstant bleibt und dass ein Verhältnis eines an der antreibenden Welle 5 anliegenden Drehmoments und eines an der abtreibenden Welle 7 bewirkten Drehmoments konstant bleibt.

Die Außenkonturen der Kurvenscheiben 9, 11 sind in einer gemeinsamen Ebene angeordnet. Diese Ebene steht jeweils senkrecht auf den Drehachsen der antreibenden Welle 5 und der abtreibenden Welle 7. Die beiden Wellen 5, 7 sind dabei parallel zueinander orientiert.

Zur Veränderung des Übersetzungsverhältnisses ist eine in der zuvor genannten gemeinsamen Ebene bewegbare Umlenkrolle 29 vorgesehen. Das Kraftübertragungsmittel 13 liegt hierbei an der Umlenkrolle 29 auf und ist daher durch Veränderung der Position der Umlenkrolle 29 mehr oder weniger umlenkbar. Hierdurch ist daher die Länge desjenigen Abschnitts 30 des Kraftübertragungsmittels 13 veränderbar, welcher zwischen den beiden Kraftangriffspunkten 26, 27 gelegen ist. Die Umlenkrolle 29 stellt somit ein Mittel 25 dar, die beiden Kraftangriffspunkte 26, 27 relativ zueinander zu bewegen. Hierdurch ist das Verhältnis der Radien 21, 22 zueinander veränderbar, in dessen Folge auch das Übersetzungsverhältnis änderbar ist.

In einem alternativen Ausführungsbeispiel ist anstelle der Umlenkrolle 29 vorgesehen, dass der Achsabstand 28 veränderlich ist. Auch hierdurch kann das Übersetzungsverhältnis geändert werden.

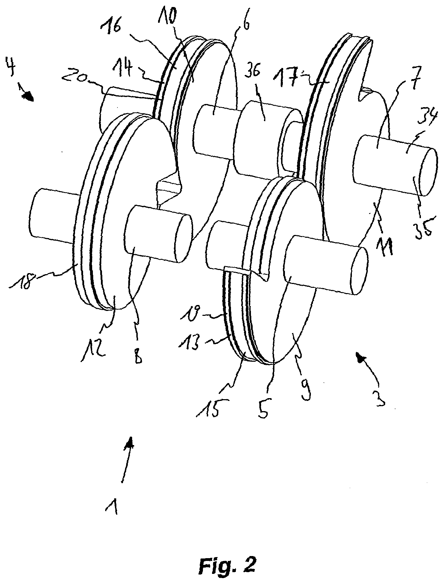

Fig. 2 zeigt ein erfindungsgemäßes stufenloses Getriebe 1 mit einer ersten Getriebestufe 3 und einer zweiten Getriebestufe 4. Beide Getriebestufen 3, 4 sind ähnlich wie in Fig. 1 gezeigt ausgebildet, insbesondere sind die Außenkonturen 15, 17 bzw. 16, 18 der Kurvenscheiben 9, 11 bzw. 10, 12 spiralförmig geformt. Allerdings bestehen auch gewisse Unterschiede.

So sind die beiden Kurvenscheiben 9, 11 bzw. 10, 12 der jeweiligen Getriebestufe 3, 4 funktional betrachtet entgegengerichtet. Dies bedeutet, dass sich im Betrieb der radiale Abstand des einen Kraftangriffspunkts erhöht, während sich der Abstand des anderen Kraftangriffspunkt verringert. Zwar weisen die Spiralöffnungen der antreibenden Kurvenscheiben 9, 11 und der abtreibenden Kurvenscheiben 10, 12 auf derselben Getriebestufe 3, 4 jeweils den gleichen Umlaufsinn auf, die Kraftübertragungsmittel 13, 14 sind jedoch über Kreuz angeordnet, so dass sie eine umkehrende Drehkopplung bewirken.

Ferner sind die antreibende Kurvenscheibe 9 der ersten Getriebestufe 3 und die abtreibende Kurvenscheibe 12 der zweiten Getriebestufe 4 baugleich. Sie unterscheiden sich jedoch von den beiden anderen, ebenfalls baugleichen Kurvenscheiben 10, 11.

Die Kurvenscheiben 9, 10, 11, 12 sind so geformt, dass ein Übersetzungsverhältnis der jeweiligen Getriebestufe 3, 4 bei einer Bewegung der jeweils antreibenden Kurvenscheibe 9, 10 mit konstanter Winkelgeschwindigkeit exponentiell verläuft. Außerdem ist der Form so, dass auf jeder der Getriebestufen 3, 4 ein Verhältnis der Winkelgeschwindigkeiten der jeweils an- und abtreibenden Kurvenscheiben 9, 10, 11, 12 exponentiell verläuft und dass jeweils ein Verhältnis eines an der antreibenden Welle 5, 6 anliegenden Drehmoments und eines an der abtreibenden Welle 7, 8 bewirkten Drehmoments exponentiell verläuft.

Die antreibende Welle 6 der zweiten Getriebestufe 4 ist dabei winkeltreu an die abtreibende Welle 7 der ersten Getriebestufe 3 gekoppelt. Diese beiden Wellen 6, 7 bilden somit eine gemeinsame Dreh- und Schwenkachse. Hierdurch wird bewirkt, dass die exponentielle Veränderung des Übersetzungsverhältnisses auf der ersten Getriebestufe 3 während des Betriebs vollständig kompensiert wird, so dass insgesamt ein konstanten Übersetzungsverhältnis zwischen der antreibenden Welle 5 der ersten Getriebestufe 3 und der abtreitenden Welle 8 der zweiten Getriebestufe 4 besteht.

In dem in Fig. 2 gezeigten Ausführungsbeispiel stimmen die Drehachsen der antreibenden Kurvenscheibe 9 der ersten Getriebestufe 3 und der abtreibenden Kurvenscheibe 12 der zweiten Getriebestufe 4 miteinander überein. Effektiv hat das gezeigte Getriebe 1 somit lediglich zwei Dreh- und Schwenkachsen.

In einem alternativen Ausführungsbeispiel hat das Getriebe 1 insgesamt drei parallele Dreh- und Schwenkachsen, welche in einer Ebene liegen, wobei die Dreh- und Schwenkachse 34, 35 der beiden funktional betrachtet mittig angeordneten Kurvenscheiben 10, 11 auch geometrische betrachtet mittig zwischen der Dreh- und Schwenkachse der antreibenden Kurvenscheibe 9 der ersten Getriebestufe 3 und der Dreh- und Schwenkachse der abtreibenden Kurvenscheibe 12 der zweiten Getriebestufe 4 angeordnet ist.

Zweckmäßigerweise kann somit beispielsweise zum Betrieb eines Fahrrads vorgesehen sein, dass die antreibende Welle 5 der ersten Getriebestufe 3 mit den Pedalen gekoppelt ist und die abtreibende Welle 8 mit der kraftumsetzenden Nabe eines der Räder des Fahrrads.

Zur Anpassung des Übersetzungsverhältnisses ist eine Verdreheinrichtung 36 vorgesehen, mit der die antreibende Welle 6 der zweiten Getriebestufe 4 gegenüber der abtreibenden Welle 7 der ersten Getriebestufe 3 verstellbar ist. Durch eine Verdrehung der beiden Wellen 6, 7 wird je nach Ausgestaltung bewirkt, dass sich das Verhältnis der radialen Abstände der Kurvenscheiben 10, 12 der zweiten Getriebestufe 4 und/oder der Kurvenscheiben 9, 11 der ersten Getriebestufe 3 verändert, so dass das Übersetzungsverhältnis geändert wird.

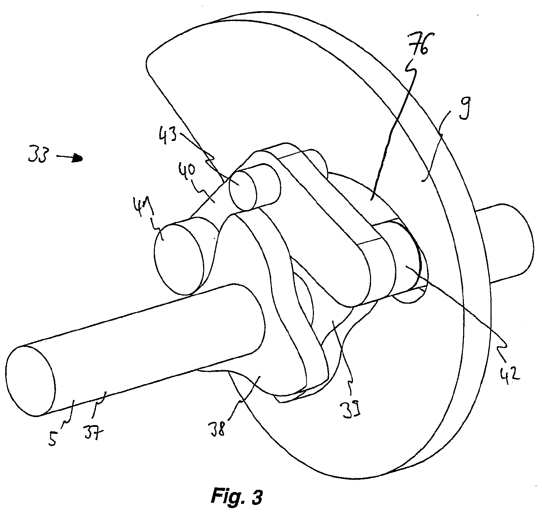

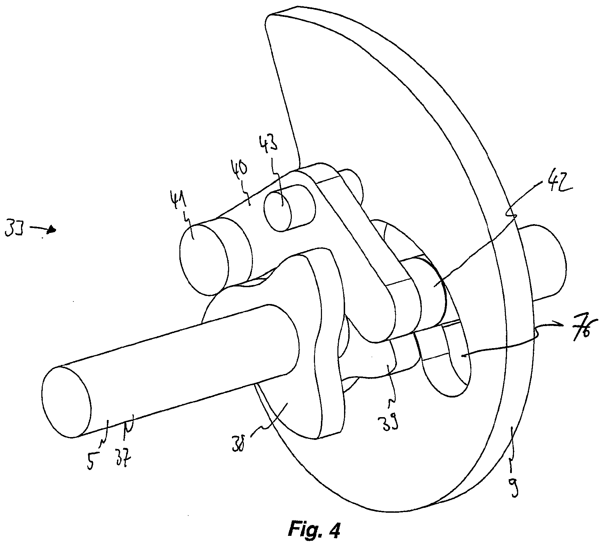

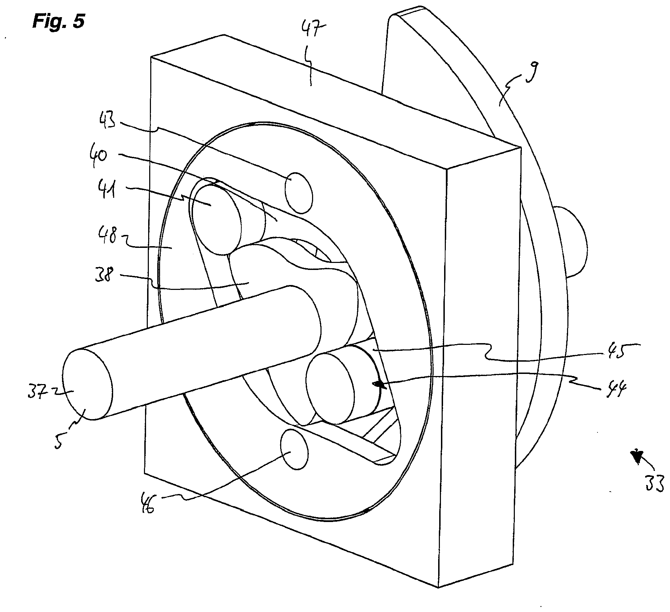

Fig. 3 bis Fig. 6 zeigen den Aufbau einer Wechselvorrichtung 33 eines erfindungsgemäßen stufenlosen Getriebes 1, wobei zum besseren Verständnis mit aufsteigender Abbildungsziffer sukzessive weitere Komponenten der Wechselvorrichtung 33 dargestellt sind. Fig. 3 bis Fig. 6 werden im Folgenden gemeinsam beschrieben.

Die Wechselvorrichtung 33 weist eine Eingangswelle 37, welche beispielsweise mit der antreibenden Welle 5 identisch sein kann, auf. An der Eingangswelle 37 sind eine erste Verschwenkscheibe 38 und eine zweite Verschwenkscheibe 39 fixiert. Die ähnlich oder in anderen Ausführungsbeispielen identisch ausgebildeten Verschwenkscheiben 38, 39 weisen eine 120°-Symmetrie auf, wobei der Scheibenradius im Winkel veränderlich ist mit einem Maximum und einem Minimum. Die beiden Verschwenkscheiben 38 und 39 sind um 60° gegeneinander verdreht, so dass sie bei Drehung der Eingangswelle 37 gegenphasig betrieben werden. Wenn der Radius der ersten Verschwenkscheibe 38 auf ein Minimum fällt, fällt der Radius der zweiten Verschwenkscheibe 39 auf ein Maximum und umgekehrt. Die Verschwenkscheiben 38, 39 können auch so ausgebildet sein, dass ein Maximum der einen Verschwenkscheibe 38, 39 nicht zugleich auf ein Minimum der anderen Verschwenkscheibe 39, 38 fällt. So kann bei entsprechender Ausbildung der Außenkontur der Verschwenkscheiben 38, 39 entlang einer Drehrichtung der Winkel von einem Minimum zu einem Maximum größer sein als der Winkel von einem Maximum zu einem Minimum. Dies kann den Vorteil haben, dass sich die Dauer des Vorwärtsschwenks von der Dauer des Rückschwenks unterscheiden kann, so dass bei doppelter Ausführung 72, 74 der Getriebestufe 2, 3, 4 genug Zeit verbleibt, dass die Kraftübertragung von der jeweils anderen Ausführung 72, 74 der Getriebestufe 2, 3, 4 übernommen werden kann.

Mit der ersten Verschwenkscheibe 38 stehen um 180° gegeneinander verdrehte Rollenhebel 40, 44 in Wirkverbindung. Gleiches gilt für die zweite Verschenkscheibe 39. Der erste Rollenhebel 40 weist eine erste Laufrolle 41, eine zweite Laufrolle 42 und eine dritte Laufrolle 43 auf. Da in dem hier beschriebenen Ausführungsbeispiel die beiden Rollenhebel 40, 44 identisch ausgebildet sind, hat auch der zweite Rollenhebel 44 insgesamt drei Laufrollen, von denen in den Abbildungen lediglich die zweite Laufrolle 45 und die dritte Laufrolle 46 sichtbar ist.

Die erste Laufrolle 41 und die zweite Laufrolle 42, 45 wird jeweils von den Verschwenkscheiben 38, 39 zwangsgesteuert. Durch die gegenphasige Anordnung der Verschwenkscheiben 38, 39 und deren 120°-Symmetrie sowie durch die um 180° gegeneinander verdrehten Anordnung der Rollenhebel 40, 44bewegen sich die Rollenhebel 40, 44 ebenfalls gegenphasig. Die zweite Laufrolle 42, 45 treibt jeweils eine Kurvenscheibe 9, 49 an. Im hier gezeigten Ausführungsbeispiel treibt die zweite Laufrolle 42 des ersten Rollenhebels 40 die bereits oben beschriebene antreibende Kurvenscheibe 9 an. Die zweite Laufrolle 45 des zweiten Rollenhebels 44 treibt die antreibende Kurvenscheibe 49 an. Die zuletzt genannte Kurvenscheibe 49 ist in dem hier beschriebenen Ausführungsbeispiel identisch ausgebildet wie die korrespondierende antreibende Kurvenscheibe 9.

Zur Antreibung der Kurvenscheibe 9, 49 wird bei Rotation der Verschwenkscheiben 38, 39 der Rollenhebel 40, 44 in eine Schwenkbewegung versetzt. Diese Schwenkbewegung wird auf die Kurvenscheiben 9, 49 umgesetzt, wobei wegen eines schräg verlaufenden Eingriffs der zweiten Laufrolle 42, 45 in eine Aussparung 76 der Kurvenscheibe 9, 49 bei der Umsetzung der Verschwenkwinkel vergrößert wird.

Die jeweils dritte Laufrolle 43, 46 ist zu beiden Seiten in in einem Gehäuse 47 drehbar gelagerten Aufnahmescheiben 48 eingelassen, zu einer Seite in die erste Aufnahmescheibe 48, zu der anderen Seite in eine nicht abgebildete, identisch ausgebildete zweite Aufnahmescheibe. Dabei ist die dritte Laufrolle 43 des ersten Rollenhebels 40 und die dritte Laufrolle 46 des zweiten Rollenhebels 44 um 180° versetzt in die jeweilige Aufnahmescheibe 48 eingelassen.

Die resultierende gegenphasige Bewegung der beiden Rollenhebel 40, 44 bewirkt eine um eine halbe Phase versetzte Bewegung der korrespondierenden antreibenden Kurvenscheiben 9, 49. Die beiden Kurvenscheiben 9, 49 schwenken daher bei Drehen der Eingangswelle 37 hin und her, jeweils alternierend und um eine halbe Phase versetzt. Zu einer identischen, lediglich um eine halbe Phase versetzten Schwenkbewegung trägt bei, dass die einzelnen Komponenten der Wechselvorrichtung 33 doppelt und identisch ausgeführt sind.

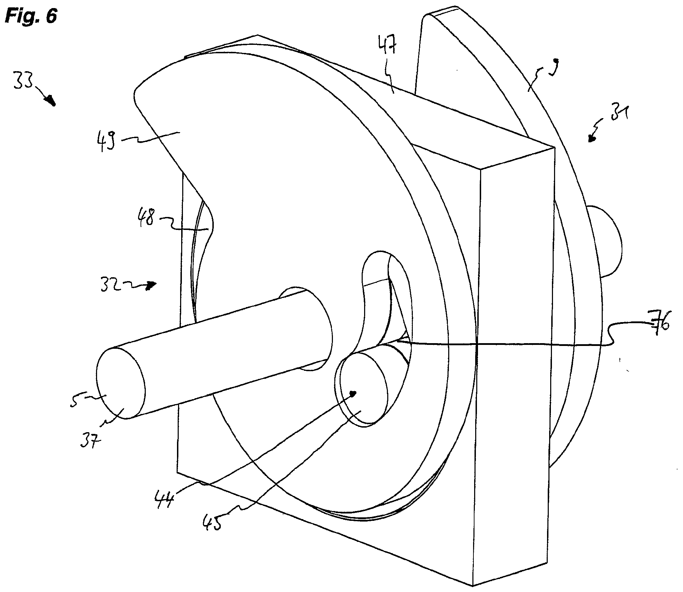

Die Wechselvorrichtung 33 erlaubt daher, die Getriebestufen 2, 3, 4 doppelt auszuführen zu einer ersten Ausführung 72 der Getriebestufe 2, 3, 4 und einer zweiten Ausführung 74 der Getriebestufe 2, 3, 4. Beispielsweise können die in Fig. 1 und Fig. 2 gezeigten Getriebe 1 doppelt ausgeführt werden und über die Wechselvorrichtung 33 miteinander gekoppelt sein. In Fig. 6 ist lediglich die jeweils antreibende Kurvenscheibe 9, 49 der jeweiligen Ausführung 72, 74 der Getriebestufe 2, 3, 4 gezeigt. Die übrigen Komponenten der zweiten Ausführung 74 entsprechen den Komponenten der ersten Ausführung 72.

Das Getriebe 1 ist ferner derart eingerichtet ist, dass die eine Ausführung 72, 74 der Getriebestufe 2, 3, 4 in einen Ausgangszustand lastfrei zurückgeholt wird, während die andere Ausführung 72, 74 der Getriebestufe 2, 3, 4 eine Kraftübertragung auf die abtreibende Welle 7, 8 bewirkt. Hierzu ist jeweils ein Freilauf zwischen der jeweils letzten abtreibenden Kurvenscheibe, in Fig. 1 wäre dies die Kurvenscheibe 11, in Fig. 2 die Kurvenscheibe 12, und der entsprechenden abtreibenden Welle 7 bzw. 8 vorgesehen.

Es kann vorgesehen sein, dass der Schwenkvorgang der Kurvenscheiben 9, 49 in der für die Kraftübertragung bestimmten Richtung länger dauert als der zurückholende Schwenkvorgang. Hierdurch kann trotz Phasenverschiebung um eine halbe Phase ein Zeitüberlapp ausgenutzt werden, während dessen sich die beiden Kurvenscheiben 9, 49 in der für die Kraftübertragung vorgesehenen Richtung bewegen. Der Zeitüberlapp sollte hierbei ausreichend lange dauern, um eine störungsfreie Übernahme der Kraftübertragung durch die jeweils andere Ausführung 72, 74 der Getriebestufe 2, 3, 4 zu ermöglichen.

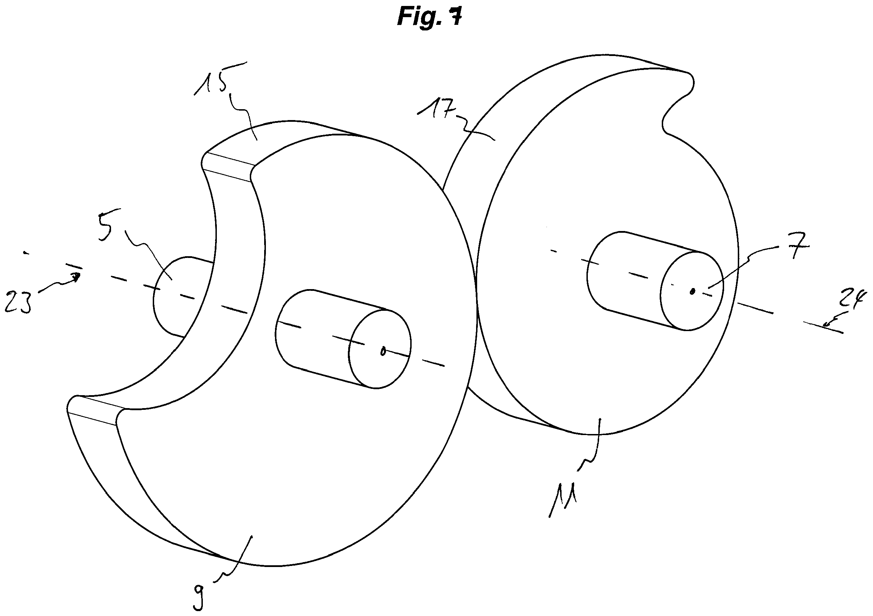

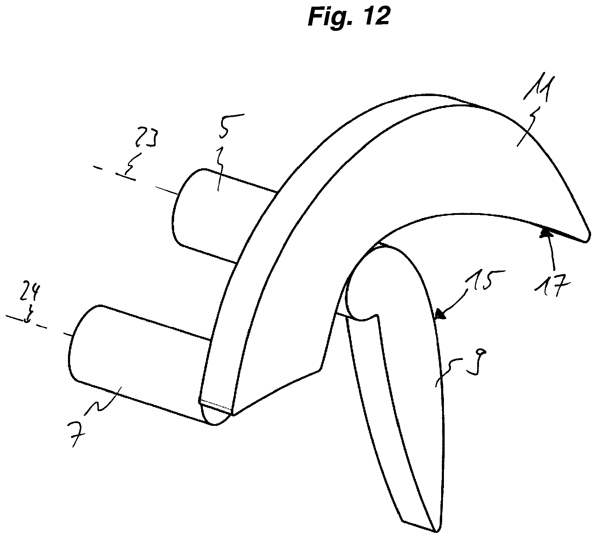

In Fig. 7 ist ein Paar von erfindungsgemäßen Kurvenscheiben 9, 11 dargestellt, die Außenkonturen 15, 17 aufweisen, welche derart geformt sind, dass eine konstante Winkelgeschwindigkeit der antreibenden Kurvenscheibe 9 in eine linear variierende Winkelgeschwindigkeit der abtreibenden Kurvenscheibe 11 umgesetzt wird. Gleiches gilt für das in Fig. 12 gezeigte Paar von Kurvenscheiben 9, 11, wobei das in Fig. 12 gezeigte Paar allerdings die Besonderheit hat, dass eine konstante Bewegung der antreibenden Kurvenscheibe 9 zunächst bewirkt, dass die abtreibende Kurvenscheibe in eine Richtung bewegt wird, sich verlangsamt, zum Stillstand kommt und dann in die andere Richtung bewegt wird. Bei dem in Fig. 7 gezeigten Paar von Kurvenscheiben 9, 11 findet jedoch keine solche Richtungsumkehr statt. Die in Fig. 7 und 12 gezeigten Kurvenscheibenpaare sind konstruiert worden wie weiter oben beschrieben und in Fig. 13 näher erläutert.

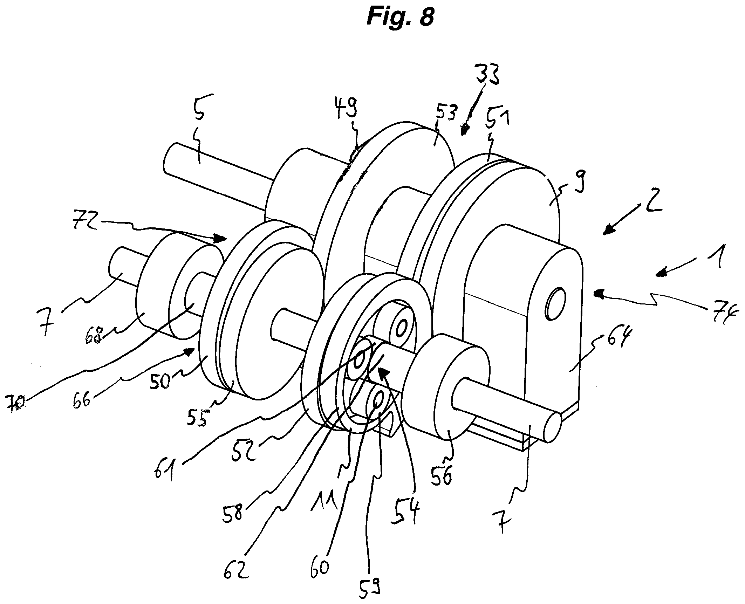

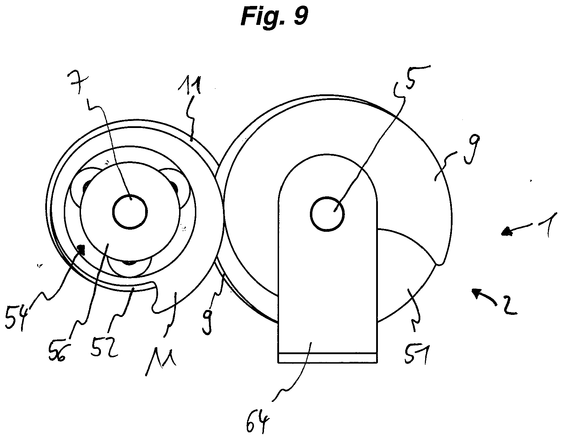

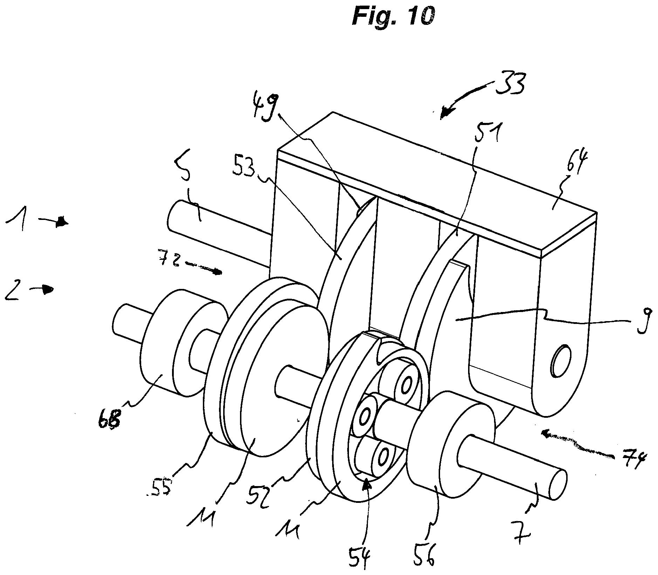

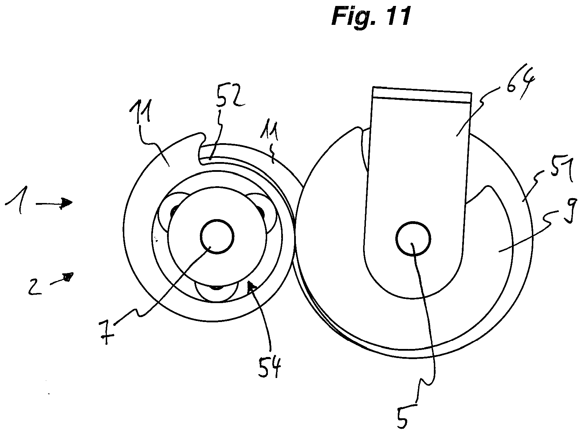

In Fig. 8 bis Fig. 11 ist ein erfindungsgemäßes stufenloses Getriebe 1 gezeigt, welches die in Fig. 7 gezeigten Kurvenscheiben 9, 11 verwendet. Fig. 8 und Fig. 9 zeigen eine erste Einstellung des Getriebes 1 in perspektivischer Ansicht (Fig. 8) und in Seitenansicht (Fig. 9). Fig. 10 und Fig. 11 zeigen das gleiche Getriebe 1, wobei der Hebel 64 eine andere Einstellung hat.

Das Getriebe 1 weist eine doppelt ausgeführte Getriebestufe 2 auf. Die beiden Ausführungen 72, 74 der Getriebestufe 2 sind nahezu identisch ausgebildet. Sie weisen jeweils eine spiralförmige antreibende Kurvenscheibe 9, 49 und eine spiralförmige abtreibende Kurvenscheibe 11, 50 auf, welche über eine im Hebel 64 angeordnete Wechselvorrichtung 33 durch eine Drehbewegung an der antreibenden Welle 5 in eine Schwenkbewegung versetzt werden, wobei die Schwenkbewegungen der beiden Ausführungen 72, 74 der Getriebestufe 2 um eine halbe Periode phasenversetzt sind. Bei konstanter Rotation der antreibenden Welle 5 ändert sich die Winkelgeschwindigkeit der jeweils abtreibenden Welle 11, 50 infolge der Ausgestaltung der Kurvenscheiben 9, 11, 49, 50 während eines Schwenks somit linear in der Zeit. Die Wechselvorrichtung 33 ist dabei ähnlich wie oben beschrieben ausgebildet, nicht jedoch identisch, da mit ihr nicht bloß die beiden antreibenden Kurvenscheiben 9, 49 angetrieben werden, sondern, wie folgt beschrieben, auch die zwei antreibenden nebengelagerten Kurvenscheiben 51, 53.

Mit der Wechselvorrichtung 33 werden ferner zwei weitere Paare von Kurvenscheiben 51, 52, 53, 55 angetrieben. Dabei sind die antreibenden nebengelagerten Kurvenscheiben 51, 53 und die abtreibenden nebengelagerten Kurvenscheiben 52, 55 kreisförmig ausgestaltet. Bei diesen Kurvenscheiben 51, 53, 52, 55 handelt sich somit um Kreisscheiben. Allerdings sind Linearisierungsmittel ausgebildet, welche bewirken, dass die antreibenden nebengelagerten Kurvenscheiben 51, 53 von der antreibenden Welle 5 in eine Schwenkbewegung versetzt werden, deren instantane Winkelgeschwindigkeit linear mit dem Schwenkwinkel variiert. Solche Linearisierungsmittel können beispielsweise durch eine Modifikation einer zuvor bereits beschriebenen Wechselvorrichtung 33 bereitgestellt werden, beispielsweise, indem die Form der Verschwenkscheiben 38, 39 und/oder ein Eingriffswinkel und/oder eine Geometrie einer Aussparung 76 der antreibenden nebengelagerten Kurvenscheiben 51, 53 so angepasst werden, dass eine linear variierende Schwenkbewegung resultiert. Alternativ kann auf solche Linearisierungsmittel verzichtet werden, wenn auch die nebengelagerten Kurvenscheiben 51, 52, 53, 55 zu einer linearen Umsetzung führen, wenn somit für sie Kurvenscheiben wie in Fig. 7 gezeigt oder ähnliche Kurvenscheiben verwendet werden. Die nebengelagerten Kurvenscheiben 51, 52, 53, 55 der beiden Ausführungen 72, 74 der Getriebestufe 2 führen Schwenkbewegungen aus, die um eine halbe Periode phasenversetzt sind.

Die Schwenkbewegungen der abtreibenden Kurvenscheiben 11, 50 und der abtreibenden nebengelagerten Kurvenscheiben 52, 55 werden für jede Ausführung 72, 74 der Getriebestufe 2 mittels einer Differentialvorrichtung 54, 66 miteinander überlagert. In dem gezeigten Ausführungsbeispiel sind die Differentialvorrichtungen 54, 66 jeweils als Planetengetriebe ausgebildet. Das Hohlrad 58 bildet einen ersten Eingang der Differentialvorrichtung 54, 66 und ist dabei von einer Ausnehmung der abtreibenden Kurvenscheibe 11, 50 gebildet, der Steg 60 des Planetengetriebes bildet einen zweiten Eingang des Differentialgetriebes 54, 66 und ist drehfest mit den abtreibenden nebengelagerten Kurvenscheiben 52, 55 verbunden und das Sonnenrad 61 ist mit einer als Hohlwelle ausgebildeten Ausgangswelle 62, 70 verbunden. Dabei sind die Ausgangswellen 62, 70 um die abtreibende Welle 7 gelagert, welche von einer Seite der Getriebestufe 2 bis zur anderen Seite der Getriebestufe 2 reicht.

Mit der Differentialvorrichtung 54, 66 werden daher die Schwenkbewegungen der abtreibenden nebengelagerten Kurvenscheiben 52, 55 und der abtreibenden Kurvenscheiben 11, 40 linear überlagert, so dass die jeweilige Ausgangswelle 62, 70 die überlagerte Schwenkbewegung ausführt. Aufgrund der Konstruktion bewirken, wie bereits beschrieben, die Schwenkbewegungen der Kurvenscheiben 9, 11, 49, 50, dass im Verlauf eines Schwenks die Winkelgeschwindigkeit der Ausgangswelle 62, 70 linear variiert. Eine solche lineare Änderung wird auch von den nebengelagerten Kurvenscheiben 51, 52, 53, 55 bewirkt.

Das Getriebe 1 wird so ausgelegt, dass sich im Ergebnis an der Ausgangswelle 62, 70 die linearen Änderungen gegeneinander aufheben. Hierzu muss erstens sichergestellt sein, dass eine durch den ersten Eingang bewirkte lineare Zunahme einhergeht mit einer durch den zweiten Eingang bewirkten linearen Abnahme. Dies kann beispielsweise bereits am Antrieb der antreibenden nebengelagerten Kurvenscheibe 51, 52, 53, 55 berücksichtigt werden oder auch durch die Orientierung der Kurvenscheiben 9, 11, 49, 50. Weiter muss sichergestellt sein, dass Zunahme und entsprechende Abnahme jeweils gleich groß sind und sich somit gegenseitig kompensieren. Dies kann durch entsprechende Auslegung der Kurvenscheiben 9, 11, 49, 50 oder nebengelagerten Kurvenscheiben 51, 52, 53, 55 erfolgen, beispielsweise durch geeignete Wahl des Radius der abtreibenden nebengelagerten Kurvenscheibe 52, 55. Zu beachten ist dabei, dass das Planetengetriebe zwei verschiedene Übersetzungen aufweist, so dass die Steigungen der beiden Eingänge so gewählt werden müssen, dass die zwei verschiedenen Übersetzungen des Planetengetriebes am Sonnenrad 61 die gleiche Steigung ergeben.

Im Ergebnis führen daher die Ausgangswellen 62, 70 alternierende Schwenkbewegungen aus mit konstanter Winkelgeschwindigkeit während eines Arbeitsschwenks. Die alternierenden Arbeitsschwenke werden sodann über eine Kupplung 56, 68 auf die abtreibende Welle 7 übertragen. Dabei wird ein Drehmoment auf die abtreibende Welle 7 nur im jeweiligen Arbeitsschwenk übertragen. Hierzu kann die Kupplung 56, 68 beispielsweise als Freilaufkupplung ausgebildet sein. Eine Freilaufkupplung kann jedoch unzweckmäßig sein, beispielsweise wenn eine Kraftübertragung auch in einem Rückwärtsbetrieb erfolgen soll. Die Kupplung 56, 68 kann daher auch anders ausgebildet sein, solange Mittel ausgebildet sind, die bewirken, dass die Kupplung 56, 68 nur im Arbeitsschwenk, nicht jedoch im Rückschwenk eingekuppelt ist. Infolge der alternierenden Schwenkbewegungen der beiden Ausführungen 72, 74 der Getriebestufe 2 werden die alternierenden Schwenkbewegungen daher zu einer konstanten Drehbewegung der abtreibenden Welle 7 kombiniert. Auf diese Weise wird ein Rückwandler bereitgestellt, der die Schwenkbewegungen wieder zu einer Drehbewegung kombiniert.

Ein solcher Rückwandler mit zwei Kupplungen 56, 68, die vorzugsweise als Freilaufkupplungen ausgebildet sein können, kann auch bei alternativen Ausführungsbeispielen, bei denen beispielsweise die oben beschriebenen exponentiellen spiralförmigen Kurvenscheiben verwendet werden, verwendet werden, um eine mit einer Wechselvorrichtung 33 erzeugte Schwenkbewegung zu einer Drehbewegung rückzuwandeln. Die Erzeugung einer zwischengeschalteten Schwenkbewegung kann vorgesehen werden, um ein stufenloses Einstellen wie oben beispielsweise im Zusammenhang mit exponentiellen Kurvenscheiben beschrieben zu ermöglichen.

Mit dem in Fig. 8 bis Fig. 11 gezeigten Getriebe 1 kann durch Verdrehen des Hebels 64 um die antreibenden Welle 5 ein Übersetzungsverhältnis stufenlos eingestellt werden. Hierbei kann das Übersetzungsverhältnis auch eine Richtungsumkehr erfahren. Es ist somit möglich, dass durch Veränderung der Stellung des Hebels 64 das Verhältnis der Winkelgeschwindigkeiten der abtreibenden Welle 7 und der antreibenden Welle 5 positiv, null oder negativ einstellbar ist, wobei das Übersetzungsverhältnis bei festgehaltener Stellung des Hebels 64 konstant bleibt.

Um dies zu erreichen, ist eine Aufnahmescheibe 48 der Wechselvorrichtung 33 (vgl. insoweit Fig. 6) drehfest mit dem Hebel 64 verbunden, wobei die Aufnahmescheibe 48 mit den antreibenden nebengelagerten Kurvenscheiben 51, 53 gekoppelt ist, nicht jedoch mit den antreibenden Kurvenscheiben 9, 49. Wird nun der Hebel 64 bewegt, so wird der Arbeitsschwenk der nebengelagerten Kurvenscheiben 51, 52, 53, 55 verändert, nicht jedoch der Arbeitsschwenk der Kurvenscheiben 9, 11, 49, 50. Hierdurch wird erreicht, dass bei gleicher Winkelgeschwindigkeit an der antreibenden Welle 5 der von den nebengelagerten Kurvenscheiben 51, 52, 53, 55 überstrichene lineare Bereich von Winkelgeschwindigkeiten verändert wird. Damit verändert sich die an der abtreibenden Welle 7 anliegende Winkelgeschwindigkeit. Je nachdem, welcher lineare Bereich von dem Arbeitsschwenk der nebengelagerten Kurvenscheiben 51, 52, 53, 55 überstrichen wird, kann die überlagerte Winkelgeschwindigkeit der abtreibenden Welle 7 positiv, null oder negativ sein.

Zusammenfassend wird erfindungsgemäß vorgeschlagen, bei einem stufenlosen Getriebe 1 die Kurvenscheiben 9, 10, 11, 12 nicht wie üblich kreisförmig, sondern spiralförmig auszugestalten. Die Außenkonturen 15, 16, 17, 18 der beiden Kurvenscheiben 9, 10, 11, 12 sind hierbei jeweils in einer Ebene angeordnet, welche regelmäßig senkrecht zu der Drehrichtung der jeweiligen Kurvenscheibe 9, 10, 11, 12 orientiert ist.

### Bezugszeichenliste

- 1: stufenloses Getriebe
- 2: Getriebestufe
- 3: erste Getriebestufe
- 4: zweite Getriebestufe
- 5: antreibende Welle
- 6: weitere antreibende Welle
- 7: abtreibende Welle
- 8: weitere abtreibende Welle
- 9: antreibende Kurvenscheibe
- 10: weitere antreibende Kurvenscheibe
- 11: abtreibende Kurvenscheibe
- 12: weitere abtreibende Kurvenscheibe
- 13: Kraftübertragungsmittel
- 14: weiteres Kraftübertragungsmittel
- 15: Außenkontur von 9
- 16: Außenkontur von 10
- 17: Außenkontur von 11
- 18: Außenkontur von 12
- 19: Band
- 20: weiteres Band
- 21: radialer Abstand
- 22: weiterer radialer Abstand
- 23: Spiralachse
- 24: weitere Spiralachse
- 25: Mittel
- 26: Kraftangriffspunkt
- 27: weiterer Kraftangriffspunkt
- 28: Achsabstand
- 29: Umlenkrolle
- 30: Abschnitt von 13 oder 14
- 33: Wechselvorrichtung
- 34: Drehachse
- 35: Schwenkachse
- 36: Verdreheinrichtung
- 37: Eingangswelle
- 38: erste Verschwenkscheibe
- 39: zweite Verschwenkscheibe
- 40: erster Rollenhebel
- 41: erste Laufrolle von 40
- 42: zweite Laufrolle von 40
- 43: dritte Laufrolle von 40
- 44: zweiter Rollenhebel
- 45: zweite Laufrolle von 44
- 46: dritte Laufrolle von 44
- 47: Gehäuse
- 48: erste Aufnahmescheibe
- 49: weitere Kurvenscheibe
- 50: weitere Kurvenscheibe
- 51: antreibende nebengelagerte Kurvenscheibe
- 52: abtreibende nebengelagerte Kurvenscheibe
- 53: weitere antreibende nebengelagerte Kurvenscheibe
- 54: Differentialvorrichtung
- 55: weitere abtreibende nebengelagerte Kurvenscheibe
- 56: Kupplung
- 58: Hohlrad
- 59: Planetenrad
- 60: Steg
- 61: Sonnenrad
- 62: Ausgangswelle
- 64: Hebel
- 66: weitere Differentialvorrichtung
- 68: weitere Kupplung
- 70: weitere Ausgangswelle
- 72: eine erste Ausführung einer Getriebestufe
- 74: eine zweite Ausführung einer Getriebestufe
- 76: Aussparung

## Patentansprüche

1. Stufenloses Getriebe (1) mit einer Getriebestufe (2, 3, 4), welche eine um eine erste Drehachse rotierende antreibende Welle (5, 6) und eine um eine zweite Drehachse rotierende abtreibende Welle (7, 8) aufweist, wobei mit der antreibenden Welle (5, 6) eine antreibende Kurvenscheibe (9, 10) und mit der abtreibenden Welle (7, 8) eine abtreibende Kurvenscheibe (11, 12) gekoppelt ist und wobei die antreibende Kurvenscheibe (9, 10) und die abtreibende Kurvenscheibe (11, 12) über mindestens ein Kraftübertragungsmittel (13, 14) miteinander bewegungsgekoppelt sind, wobei die antreibende Kurvenscheibe (9, 10) und die abtreibende Kurvenscheibe (11, 12) jeweils eine spiralförmige Außenkontur (15, 16, 17, 18) aufweisen, wobei die Außenkontur (15, 16) der antreibenden Kurvenscheibe (9, 10) in einer ersten Ebene, die senkrecht zu der ersten Drehachse orientiert ist, angeordnet ist, die Außenkontur (17, 18) der abtreibende Kurvenscheibe (11, 12) in einer zweiten Ebene, die senkrecht zur der zweiten Drehachse orientiert ist, angeordnet ist und die mindestens eine Getriebestufe (2, 3, 4) doppelt ausgeführt ist, wobei die Kurvenscheiben (9, 10, 11, 12, 49, 50) einer ersten Ausführung (72, 74) der Getriebestufe (2, 3, 4) im Betrieb phasenversetzt zu den Kurvenscheiben (9, 10, 11, 12, 49, 50) einer zweiten Ausführung (72, 74) der Getriebestufe (2, 3, 4) schwenkbar sind, wobei eine Wechselvorrichtung (33) ausgebildet ist, mit der eine Rotationsbewegung der antreibenden Welle (5, 6) in eine phasenversetzte Schwenkbewegung von sich korrespondierenden Kurvenscheiben (9, 10, 11, 12, 49, 50) der ersten und zweiten Ausführung (72, 74) der Getriebestufe (2, 3, 4) umsetzbar ist und wobei ein Rückwandler vorgesehen ist, der eingerichtet ist, die phasenversetzte Schwenkbewegung der sich korrespondierenden Kurvenscheiben (9, 10, 11, 12, 49, 50) der ersten und zweiten Ausführung (72, 74) der Getriebestufe (2, 3, 4) zu einer Rotationsbewegung der abtreibenden Welle (7, 8) zu kombinieren.

2. Stufenloses Getriebe (1) nach Anspruch 1, **dadurch gekennzeichnet, dass** die erste Drehachse und die zweite Drehachse parallel sind oder miteinander übereinstimmen und/oder dass die erste Ebene und die zweite Ebene parallel sind oder miteinander übereinstimmen und/oder dass das Kraftübertragungsmittel (13, 14) bandförmig ausgebildet ist, insbesondere wobei das Kraftübertragungsmittel (13, 14) ein Band (19, 20), ein Riemen oder eine Kette ist, oder dass das Kraftübertragungsmittel (13, 14) von einer Verzahnung der Kurvenscheiben (9, 10, 11, 12) gebildet ist.

3. Stufenloses Getriebe (1) nach einem der vorangehenden Ansprüche, **dadurch gekennzeichnet, dass** die spiralförmigen Außenkonturen (15, 16, 17, 18) der antreibenden Kurvenscheibe (9, 10) und der abtreibenden Kurvenscheibe (11, 12) gleichgerichtet sind, insbesondere wobei die Außenkontur (15, 16, 17, 18) der antreibenden Kurvenscheibe (9, 10) und/oder der abtreibenden Kurvenscheibe (11, 12) derart geformt ist, dass ein Übersetzungsverhältnis der Getriebestufe (2, 3, 4) bei einer Bewegung der antreibenden Kurvenscheibe (9, 10) und der abtreibenden Kurvenscheibe (11, 12) konstant bleibt und/oder wobei ein Verhältnis der Winkelgeschwindigkeiten der antreibenden Kurvenscheibe (9, 10) und der abtreibenden Kurvenscheibe (11, 12) konstant bleibt und/oder wobei ein Verhältnis eines an der antreibenden Welle (5, 6) anliegenden Drehmoments und eines an der abtreibenden Welle (7, 8) bewirkten Drehmoments konstant bleibt.

4. Stufenloses Getriebe (1) nach einem der vorangehenden Ansprüche, **dadurch gekennzeichnet, dass** die spiralförmigen Außenkonturen (15, 16, 17, 18) der antreibenden Kurvenscheibe (9, 10) und der abtreibenden Kurvenscheibe (11, 12) entgegengerichtet sind, insbesondere wobei die Außenkontur (15, 16) der antreibenden Kurvenscheibe (9, 10) und/oder die Außenkontur (17, 18) der abtreibenden Kurvenscheibe (11, 12) derart geformt ist/sind, dass ein Übersetzungsverhältnis der Getriebestufe (2, 3, 4) bei einer Bewegung der antreibenden Kurvenscheibe (9, 10) mit konstanter Winkelgeschwindigkeit exponentiell verläuft und/oder wobei ein Verhältnis der Winkelgeschwindigkeiten der an- und abtreibenden Kurvenscheiben (9, 10, 11, 12) exponentiell verläuft und/oder wobei ein Verhältnis eines an der antreibenden Welle (5, 6) anliegenden Drehmoments und eines an der abtreibenden Welle (7, 8) bewirkten Drehmoments exponentiell verläuft.

5. Stufenloses Getriebe (1) nach einem der vorangehenden Ansprüche, **dadurch gekennzeichnet, dass** die spiralförmigen Außenkonturen (15, 16, 17, 18) jeweils eine mathematische Kurve beschreiben, deren radialer Abstand (21, 22) von einer jeweiligen Spiralachse (23, 24) exponentiell in der Bogenlänge der Kurve und/oder exponentiell in einem Winkel um die jeweilige Spiralachse (23, 24) ist, insbesondere wobei die antreibende und die abtreibende Kurvenscheibe (9, 10, 11, 12) identisch ausgebildet sind.

6. Stufenloses Getriebe (1) nach einem der Ansprüche 1 bis 4, **dadurch gekennzeichnet, dass** die Außenkontur (15, 16) der antreibenden Kurvenscheibe (9, 10) und/oder die Außenkontur (17, 18) der abtreibenden Kurvenscheibe (11, 12) derart geformt ist/sind, dass ein Übersetzungsverhältnis der Getriebestufe (2, 3, 4) bei einer Bewegung der antreibenden Kurvenscheibe (9, 10) mit konstanter Winkelgeschwindigkeit linear verläuft und/oder dass ein Verhältnis der Winkelgeschwindigkeiten der an- und abtreibenden Kurvenscheiben (9, 10, 11, 12) linear verläuft und/oder dass ein Verhältnis eines an der antreibenden Welle (5, 6) anliegenden Drehmoments und eines an der abtreibenden Welle (7, 8) bewirkten Drehmoments linear verläuft.

7. Stufenloses Getriebe (1) nach einem der Ansprüche 1 bis 4 oder nach dem vorangehenden Anspruch, **dadurch gekennzeichnet, dass** die spiralförmigen Außenkonturen (15, 16, 17, 18) jeweils eine mathematische Kurve beschreiben, deren radialer Abstand (21, 22) von einer jeweiligen Spiralachse (23, 24) durch eine mathematische Funktion beschrieben ist, deren erste Ableitung nach der Bogenlänge der Kurve oder nach dem Winkel um die jeweilige Spiralachse (23, 24) monoton fallend ist.

8. Stufenloses Getriebe (1) nach einem der vorangehenden Ansprüche, **dadurch gekennzeichnet, dass** eine Differenzvorrichtung (54) ausgebildet ist, mit der eine Bewegung der abtreibenden Kurvenscheibe (11, 12) und eine Bewegung einer abtreibenden nebengelagerten Kurvenscheibe (52) linear überlagerbar sind oder überlagert werden, insbesondere wobei mit der Differenzvorrichtung (54) ein linear variierender Bewegungsverlauf der abtreibenden Kurvenscheibe (11, 12) durch einen linear variierenden Bewegungsverlauf der abtreibenden nebengelagerten Kurvenscheibe (52) kompensierbar ist oder kompensiert wird.

9. Stufenloses Getriebe (1) nach einem der vorangehenden Ansprüche, **dadurch gekennzeichnet, dass** die Getriebestufe (2, 3, 4) Mittel (25, 29) umfasst, mit denen ein auf der Außenkontur (15, 16) der antreibenden Kurvenscheibe (9, 10) ausgebildeter, fortschreitender Kraftangriffspunkt (26) für das Kraftübertragungsmittel (13, 14) und ein auf der Außenkontur (17, 18) der abtreibenden Kurvenscheibe (11, 12) ausgebildeter, fortschreitender Kraftangriffspunkt (27) für das Kraftübertragungsmittel (13, 14) relativ zueinander bewegbar sind, und/oder dass die antreibende Kurvenscheibe (9, 10) und die abtreibende Kurvenscheibe (11, 12) in einem Achsabstand (28) zueinander beabstandet angeordnet sind, wobei der Achsabstand (28) veränderlich ist.

10. Stufenloses Getriebe (1) nach einem der vorangehenden Ansprüche, **dadurch gekennzeichnet, dass** die Kurvenscheiben (9, 10, 11, 12, 49, 50) einer ersten Ausführung (72, 74) der Getriebestufe (2, 3, 4) im Betrieb alternierend zu den Kurvenscheiben (9, 10, 11, 12, 49, 50) der zweiten Ausführung (72, 74) der Getriebestufe (2, 3, 4) schwenkbar sind.

11. Stufenloses Getriebe (1) nach dem vorangehenden Anspruch, **dadurch gekennzeichnet, dass** die Wechselvorrichtung (33) ausgebildet ist, mit der eine Rotationsbewegung einer Eingangswelle (5, 6, 7, 8, 37) in eine alternierende, Schwenkbewegung von den sich korrespondierenden Kurvenscheiben (9, 10, 11, 12, 49, 50) der ersten und zweiten Ausführung (72, 74) der Getriebestufe (2, 3, 4) umsetzbar ist oder umgesetzt wird, insbesondere wobei das Getriebe (1) derart eingerichtet ist, dass die eine Ausführung (72, 74) der Getriebestufe (2, 3, 4) in einen Ausgangszustand lastfrei zurückgeholt wird, während die andere Ausführung (72, 74) der Getriebestufe (2, 3, 4) eine Kraftübertragung auf die abtreibende Welle (7, 8) bewirkt.

12. Stufenloses Getriebe (1) nach dem vorangehenden Anspruch, **dadurch gekennzeichnet, dass** ein Rückwandler vorgesehen ist, der eingerichtet ist, die alternierende Schwenkbewegung der sich korrespondierenden Kurvenscheiben (9, 10, 11, 12, 49, 50) der ersten und zweiten Ausführung (72, 74) der Getriebestufe (2, 3, 4) zu einer Rotationsbewegung der abtreibenden Welle (7, 8) zu kombinieren, insbesondere wobei der Rückwandler für jede Ausführung (72, 74) der Getriebestufe (2, 3, 4) jeweils eine Kupplung (56, 68) aufweist, die während eines Arbeitsschwenks der jeweiligen Ausführung (72, 74) der Getriebestufe (2, 3, 4) ein Drehmoment auf die abtreibenden Welle (7, 8) überträgt.

13. Stufenloses Getriebe (1) nach einem der vorangehenden Ansprüche, **dadurch gekennzeichnet, dass** die Getriebestufe (2, 3, 4) eine erste Getriebestufe (2, 3, 4) bildet, dass eine zweite Getriebestufe (2, 3, 4) ausgebildet ist, welche nach einem der vorangehenden Ansprüche ausgebildet ist, und dass die abtreibende Kurvenscheibe (11, 12) der ersten Getriebestufe (2, 3, 4) und die antreibende Kurvenscheibe (9, 10) der zweiten Getriebestufe (2, 3, 4) winkeltreu zueinander gekoppelt sind, insbesondere wobei eine gemeinsame Dreh- oder Schwenkachse (34, 35) gebildet ist.

14. Stufenloses Getriebe (1) nach dem vorangehenden Anspruch, **dadurch gekennzeichnet dass** zur Veränderung eines oder des Übersetzungsverhältnisses des Getriebes (1) die abtreibende Kurvenscheibe (11, 12) der ersten Getriebestufe (2, 3, 4) gegenüber der antreibenden Kurvenscheibe (9, 10) der zweiten Getriebestufe (2, 3, 4) verdrehbar ist.

15. Verfahren zum Betreiben eines stufenlosen Getriebes (1) nach einem der vorangehenden Ansprüche, **dadurch gekennzeichnet, dass** eine eine Kurvenscheibe (9, 10, 11, 12) mit spiralförmiger Außenkontur (15, 16, 17, 18) aufweisende Getriebestufe (2, 3, 4) doppelt ausgeführt ist, dass die beiden Ausführungen (72, 74) der Getriebestufen (2, 3, 4) alternierend ein- und ausgekuppelt werden und dass die jeweils ausgekuppelte Ausführung (72, 74) der Getriebestufe (2, 3, 4) in einen Ausgangszustand zurückgeholt wird, während die jeweils eingekuppelte Ausführung (72, 74) der Getriebestufe (2, 3, 4) eine Kraftübertragung auf eine abtreibende Welle (7, 8) bewirkt.

## Claims

1. Continuously variable transmission (1) with a transmission stage (2, 3, 4), which has a driving shaft (5, 6) which rotates about a first rotation axis and a driven shaft (7, 8) which rotates about a second rotation axis, wherein a driving cam disk (9, 10) is coupled to the driving shaft (5, 6) and a driven cam disk (11, 12) is coupled to the driven shaft (7, 8), and wherein the driving cam disk (9, 10) and the driven cam disk (11, 12) are coupled to one another in terms of movement via at least one force-transmitting means (13, 14), wherein the driving cam disk (9, 10) and the driven cam disk (11, 12) each have a spiral-shaped outer contour (15, 16, 17, 18), wherein the outer contour (15, 16) of the driving cam disk (9, 10) is arranged in a first plane, which is oriented perpendicular to the first rotation axis, wherein the outer contour (17, 18) of the driven cam disk (11, 12) is arranged in a second plane, which is oriented perpendicular to the second rotation axis, and wherein the at least one transmission stage (2, 3, 4) is implemented twofold, wherein the cam disks (9, 10, 11, 12, 49, 50) of a first implementation (72, 74) of the transmission stage (2, 3, 4) are, during operation, pivotable in a phase-offset manner in relation to the cam disks (9, 10, 11, 12, 49, 50) of a second implementation (72, 74) of the transmission stage (2, 3, 4), wherein a changeover device (33) is formed, by means of which a rotational movement of the driving shaft (5, 6) can be converted into a phase-offset pivoting movement of mutually corresponding cam disks (9, 10, 11, 12, 49, 50) of the first and second implementations (72, 74) of the transmission stage (2, 3, 4), and wherein a reconverter is provided which is configured to combine the phase-offset pivoting movement of the mutually corresponding cam disks (9, 10, 11, 12, 49, 50) of the first and second implementations (72, 74) of the transmission stage (2, 3, 4) into a rotational movement of the driven shaft (7, 8).

2. Continuously variable transmission (1) according to Claim 1, **characterized in that** the first rotation axis and the second rotation axis are parallel or coincide with one another, and/or **in that** the first plane and the second plane are parallel or coincide with one another, and/or **in that** the force-transmitting means (13, 14) is of belt-like form, wherein, in particular, the force-transmitting means (13, 14) is a belt (19, 20), a band or a chain, or **in that** the force-transmitting means (13, 14) is formed by a toothing of the cam disks (9, 10, 11, 12).

3. Continuously variable transmission (1) according to either of the preceding claims, **characterized in that** the spiral-shaped outer contours (15, 16, 17, 18) of the driving cam disk (9, 10) and of the driven cam disk (11, 12) are oriented in the same direction, wherein, in particular, the outer contour (15, 16, 17, 18) of the driving cam disk (9, 10) and/or of the driven cam disk (11, 12) is shaped such that a transmission ratio of the transmission stage (2, 3, 4) remains constant during a movement of the driving cam disk (9, 10) and of the driven cam disk (11, 12) and/or wherein a ratio of the angular speeds of the driving cam disk (9, 10) and of the driven cam disk (11, 12) remains constant and/or wherein a ratio of a torque acting at the driving shaft (5, 6) and of a torque effected at the driven shaft (7, 8) remains constant.

4. Continuously variable transmission (1) according to any of the preceding claims, **characterized in that** the spiral-shaped outer contours (15, 16, 17, 18) of the driving cam disk (9, 10) and of the driven cam disk (11, 12) are oriented in opposite directions, wherein, in particular, the outer contour (15, 16) of the driving cam disk (9, 10) and/or the outer contour (17, 18) of the driven cam disk (11, 12) are/is shaped such that a transmission ratio of the transmission stage (2, 3, 4) behaves exponentially during a movement of the driving cam disk (9, 10) with constant angular speed and/or wherein a ratio of the angular speeds of the driving and driven cam disks (9, 10, 11, 12) behaves exponentially and/or wherein a ratio of a torque acting at the driving shaft (5, 6) and of a torque effected at the driven shaft (7, 8) behaves exponentially.

5. Continuously variable transmission (1) according to any of the preceding claims, **characterized in that** the spiral-shaped outer contours (15, 16, 17, 18) each describe a mathematical curve, the radial spacing (21, 22) of which from a respective spiral axis (23, 24) is exponential in the arc length of the curve and/or exponential in an angle about the respective spiral axis (23, 24), wherein, in particular, the driving and the driven cam disk (9, 10, 11, 12) are of identical form.

6. Continuously variable transmission (1) according to any of Claims 1 to 4, **characterized in that** the outer contour (15, 16) of the driving cam disk (9, 10) and/or the outer contour (17, 18) of the driven cam disk (11, 12) are/is shaped such that a transmission ratio of the transmission stage (2, 3, 4) behaves linearly during a movement of the driving cam disk (9, 10) with constant angular speed and/or such that a ratio of the angular speeds of the driving and driven cam disks (9, 10, 11, 12) behaves linearly and/or such that a ratio of a torque acting at the driving shaft (5, 6) and of a torque effected at the driven shaft (7, 8) behaves linearly.

7. Continuously variable transmission (1) according to any of Claims 1 to 4 or according to the preceding claim, **characterized in that** the spiral-shaped outer contours (15, 16, 17, 18) each describe a mathematical curve, the radial spacing (21, 22) of which from a respective spiral axis (23, 24) is described by a mathematical function, of which the first derivative with respect to the arc length of the curve or with respect to the angle about the respective spiral axis (23, 24) is monotonously decreasing.

8. Continuously variable transmission (1) according to any of the preceding claims, **characterized in that** a differential device (54) is formed by means of which a movement of the driven cam disk (11, 12) and a movement of a driven adjacently mounted cam disk (52) can be or are linearly superposed, wherein, in particular, with the differential device (54), a linearly varying movement profile of the driven cam disk (11, 12) can be or is compensated by way of a linearly varying movement profile of the driven adjacently mounted cam disk (52).

9. Continuously variable transmission (1) according to any of the preceding claims, **characterized in that** the transmission stage (2, 3, 4) comprises means (25, 29) with which an advancing force action point (26), formed on the outer contour (15, 16) of the driving cam disk (9, 10), for the force-transmitting means (13, 14) and an advancing force action point (27), formed on the outer contour (17, 18) of the driven cam disk (11, 12), for the force-transmitting means (13, 14) are movable relative to one another, and/or **in that** the driving cam disk (9, 10) and the driven cam disk (11, 12) are arranged so as to be spaced apart with an axis spacing (28) to one another, wherein the axis spacing (28) is variable.

10. Continuously variable transmission (1) according to any of the preceding claims, **characterized in that** the cam disks (9, 10, 11, 12, 49, 50) of a first implementation (72, 74) of the transmission stage (2, 3, 4) are, during operation, pivotable in an alternating manner in relation to the cam disks (9, 10, 11, 12, 49, 50) of the second implementation (72, 74) of the transmission stage (2, 3, 4) .

11. Continuously variable transmission (1) according to the preceding claim, **characterized in that** the changeover device (33) is formed, by means of which a rotational movement of an input shaft (5, 6, 7, 8, 37) can be or is converted into an alternating pivoting movement of the mutually corresponding cam disks (9, 10, 11, 12, 49, 50) of the first and second implementations (72, 74) of the transmission stage (2, 3, 4), wherein, in particular, the transmission (1) is configured such that the one implementation (72, 74) of the transmission stage (2, 3, 4) is returned, free from load, into an initial state while the other implementation (72, 74) of the transmission stage (2, 3, 4) effects a transmission of force to the driven shaft (7, 8).

12. Continuously variable transmission (1) according to the preceding claim, **characterized in that** a reconverter is provided which is configured to combine the alternating pivoting movement of the mutually corresponding cam disks (9, 10, 11, 12, 49, 50) of the first and second implementations (72, 74) of the transmission stage (2, 3, 4) into a rotational movement of the driven shaft (7, 8), wherein, in particular, the reconverter has, for each implementation (72, 74) of the transmission stage (2, 3, 4), in each case one clutch (56, 68) which transmits a torque to the driven shaft (7, 8) during a working pivoting movement of the respective implementation (72, 74) of the transmission stage (2, 3, 4).

13. Continuously variable transmission (1) according to any of the preceding claims, **characterized in that** the transmission stage (2, 3, 4) forms a first transmission stage (2, 3, 4), **in that** a second transmission stage (2, 3, 4) is formed which is designed according to any of the preceding claims, and **in that** the driven cam disk (11, 12) of the first transmission stage (2, 3, 4) and the driving cam disk (9, 10) of the second transmission stage (2, 3, 4) are coupled angularly consistently with respect to one another, wherein, in particular, a common rotation or pivot axis (34, 35) is formed.

14. Continuously variable transmission (1) according to the preceding claim, **characterized in that**, for the variation of a or the transmission ratio of the transmission (1), the driven cam disk (11, 12) of the first transmission stage (2, 3, 4) is rotatable relative to the driving cam disk (9, 10) of the second transmission stage (2, 3, 4).

15. Method for operating a continuously variable transmission (1) according to any of the preceding claims, **characterized in that** a transmission stage (2, 3, 4) which has a cam disk (9, 10, 11, 12) with spiral-shaped outer contour (15, 16, 17, 18) is implemented twofold, **in that** the two implementations (72, 74) of the transmission stages (2, 3, 4) are alternately engaged and disengaged, and **in that** the respectively disengaged implementation (72, 74) of the transmission stage (2, 3, 4) is returned into an initial state while the respectively engaged implementation (72, 74) of the transmission stage (2, 3, 4) effects a transmission of force to a driven shaft (7, 8).

## Revendications

1. Transmission à variation continue (1) comprenant un étage de transmission (2, 3, 4), ledit étage de transmission présentant un arbre moteur (5, 6) qui tourne autour d'un premier axe de rotation et un arbre de sortie (7, 8) qui tourne autour d'un second axe de rotation, dans laquelle une came d'entraînement (9, 10) est accouplée à l'arbre moteur (5, 6) et une came entraînée (11, 12) est accouplée à l'arbre de sortie (7, 8) et dans laquelle la came d'entraînement (9, 10) et la came entrainée (11, 12) sont accouplées en mouvement l'une à l'autre par l'intermédiaire d'au moins un moyen de transmission de force (13, 14), la came d'entraînement (9, 10) et la came entrainée (11, 12) présentant respectivement un contour extérieur (15, 16, 17, 18) en forme de spirale, le contour extérieur (15, 16) de la came d'entraînement (9, 10) étant disposé dans un premier plan, ledit plan étant orienté perpendiculairement au premier sens de rotation, le contour extérieur (17, 18) de la came entraînée (11, 12) étant disposé dans un second plan, ledit plan étant orienté perpendiculairement au second sens de rotation et ledit au moins un étage de transmission (2, 3, 4) étant conçu en double, dans laquelle les cames (9, 10, 11, 12, 49, 50) d'un premier mode de réalisation (72, 74) de l'étage de transmission (2, 3, 4) peuvent, lors du fonctionnement, pivoter avec un décalage de phase, en direction des cames (9, 10, 11, 12, 49, 50) d'un second mode de réalisation (72, 74) de l'étage de transmission (2, 3, 4), un dispositif de changement (33) étant prévu par l'intermédiaire duquel un mouvement de rotation de l'arbre moteur (5, 6) peut être converti en un mouvement de pivotement déphasé de cames correspondantes (9, 10, 11, 12, 49, 50) du premier et du second modes de réalisation (72, 74) de l'étage de transmission (2, 3, 4) et un inverseur étant prévu, qui est conçu de manière à combiner le mouvement de pivotement déphasé des cames correspondantes (9, 10, 11, 12, 49, 50) du premier et du second modes de réalisation (72, 74) de l'étage de transmission (2, 3, 4) avec un mouvement de rotation de l'arbre de sortie (7, 8).

2. Transmission à variation continue (1) selon la revendication 1, **caractérisée en ce que** le premier axe de rotation et le second axe de rotation sont parallèles ou coïncidents et/ou **en ce que** le premier plan et le second plan sont parallèles ou coïncidents et/ou **en ce que** le moyen de transmission de force (13, 14) est en forme de bande, le moyen de transmission de force (13, 14) étant en particulier une bande (19, 20), une courroie ou une chaîne, ou **en ce que** le moyen de transmission de force (13, 14) est formé par une denture des cames (9, 10, 11, 12).

3. Transmission à variation continue (1) selon l'une quelconque des revendications précédentes, **caractérisée en ce que** les contours extérieurs (15, 16, 17, 18) en forme de spirale de la came d'entraînement (9, 10) et de la came entraînée (11, 12) sont orientés dans le même sens, le contour extérieur (15, 16, 17, 18) de la came d'entraînement (9, 10) et de la came entraînée (11, 12) étant en particulier formé de telle sorte qu'un rapport de démultiplication de l'étage de transmission (2, 3, 4) reste constant lors d'un mouvement de la came d'entraînement (9, 10) et de la came entraînée (11, 12) et/ou un rapport des vitesses angulaires de la came d'entraînement (9, 10) et de la came entraînée (11, 12) restant constant et/ou un rapport d'un couple appliqué à l'arbre moteur (5, 6) et d'un couple engendré sur l'arbre de sortie (7, 8) restant constant.

4. Transmission à variation continue (1) selon l'une quelconque des revendications précédentes, **caractérisée en ce que** les contours extérieurs (15, 16, 17, 18) en forme de spirale de la came d'entraînement (9, 10) et de la came entraînée (11, 12) sont orientés dans des sens opposés, le contour extérieur (15, 16) de la came d'entraînement (9, 10) et/ou le contour extérieur (17, 18) de la came entraînée (11, 12) étant en particulier formé(s) de telle sorte qu'un rapport de démultiplication de l'étage de transmission (2, 3, 4) soit exponentiel lors d'un mouvement de la came d'entraînement (9, 10) à une vitesse angulaire constante et/ou un rapport entre les vitesses angulaires des cames d'entraînement et des cames entraînées (9, 10, 11, 12) étant exponentiel et/ou un rapport entre un couple appliqué à l'arbre moteur (5, 6) et un couple engendré sur l'arbre de sortie (7, 8) étant exponentiel.

5. Transmission à variation continue (1) selon l'une quelconque des revendications précédentes, **caractérisée en ce que** les contours extérieurs (15, 16, 17, 18) en forme de spirale décrivent respectivement une courbe mathématique dont la distance radiale (21, 22) par rapport à un axe de spirale (23, 24) respectif est exponentielle dans la longueur d'arc de la courbe et/ou exponentielle au niveau d'un angle autour de l'axe de spirale (23, 24) respectif, la came d'entraînement et la came entraînée (9, 10, 11, 12) étant en particulier formées de façon identique.

6. Transmission à variation continue (1) selon l'une quelconque des revendications 1 à 4, **caractérisée en ce que** le contour extérieur (15, 16) de la came d'entraînement (9, 10) et/ou le contour extérieur (17, 18) de la came entraînée (11, 12) est (sont) formé(s) de telle sorte qu'un rapport de démultiplication de l'étage de transmission (2, 3, 4) soit linéaire lors d'un mouvement de la came d'entraînement (9, 10) à une vitesse angulaire constante et/ou **en ce qu'**un rapport entre les vitesses angulaires des cames d'entraînement et des cames entraînées (9, 10, 11, 12) est linéaire et/ou **en ce qu'**un rapport entre un couple appliqué à l'arbre moteur (5, 6) et un couple engendré sur l'arbre de sortie (7, 8) est linéaire.

7. Transmission à variation continue (1) selon l'une quelconque des revendications 1 à 4 ou selon la revendication précédente, **caractérisée en ce que** les contours extérieurs (15, 16, 17, 18) en forme de spirale décrivent respectivement une courbe mathématique dont la distance radiale (21, 22) par rapport à un axe de spirale (23, 24) respectif est décrite par une fonction mathématique dont la première dérivée décroît de façon monotone en fonction de la longueur d'arc de la courbe ou en fonction de l'angle autour de l'axe de spirale (23, 24) respectif.

8. Transmission à variation continue (1) selon l'une quelconque des revendications précédentes, **caractérisée en ce qu'**il est prévu un dispositif différentiel (54) à l'aide duquel un mouvement de la came entraînée (11, 12) et un mouvement d'une came entraînée (52) montée en dérivation peuvent être superposés ou sont superposés de façon linéaire, une trajectoire de mouvement variant de façon linéaire de la came entraînée (11, 12) pouvant en particulier être compensée ou étant compensée, au moyen du dispositif différentiel (54), par une trajectoire de mouvement variant de façon linéaire de la came entraînée (52) montée latéralement.

9. Transmission à variation continue (1) selon l'une quelconque des revendications précédentes, **caractérisée en ce que** l'étage de transmission (2, 3, 4) comprend des moyens (25, 29) à l'aide desquels un point d'application d'une force (26), progressif pour le moyen de transmission de force (13, 14), formé sur le contour extérieur (15, 16) de la came d'entraînement (9, 10), et un point d'application d'une force (27), progressif pour le moyen de transmission de force (13, 14), formé sur le contour extérieur (17, 18) de la came entraînée (11, 12), sont mobiles l'un par rapport à l'autre, et/ou **en ce que** la came d'entraînement (9, 10) et la came entraînée (11, 12) sont espacées l'une de l'autre d'une distance axiale (28), la distance axiale (28) étant variable.

10. Transmission à variation continue (1) selon l'une quelconque des revendications précédentes, **caractérisée en ce que** les cames (9, 10, 11, 12, 49, 50) d'un premier mode de réalisation (72, 74) de l'étage de transmission (2, 3, 4) peuvent, lors du fonctionnement, pivoter de façon alternée en direction des cames (9, 10, 11, 12, 49, 50) du second mode de réalisation (72, 74) de l'étage de transmission (2, 3, 4).

11. Transmission à variation continue (1) selon la revendication précédente, **caractérisée en ce qu'**il est prévu un dispositif de changement (33) à l'aide duquel un mouvement de rotation d'un arbre d'entrée (5, 6, 7, 8, 37) peut être converti ou est converti en un mouvement de pivotement alterné des cames correspondantes (9, 10, 11, 12, 49, 50) du premier et du second modes de réalisation (72, 74) de l'étage de transmission (2, 3, 4), la transmission (1) étant en particulier conçue de telle sorte qu'un mode de réalisation (72, 74) de l'étage de transmission (2, 3, 4) soit ramené dans un état initial sans charge, tandis que l'autre mode de réalisation (72, 74) de l'étage de transmission (2, 3, 4) engendre une transmission de force sur l'arbre de sortie (7, 8).

12. Transmission à variation continue (1) selon la revendication précédente, **caractérisée en ce qu'**il est prévu un inverseur, qui est conçu pour combiner le mouvement de pivotement alterné des cames correspondantes (9, 10, 11, 12, 49, 50) du premier et du second modes de réalisation (72, 74) de l'étage de transmission (2, 3, 4) avec un mouvement de rotation de l'arbre de sortie (7, 8), l'inverseur présentant en particulier pour chaque mode de réalisation (72, 74) de l'étage de transmission (2, 3, 4) respectivement un accouplement (56, 68) qui transmet un couple à l'arbre de sortie (7, 8) pendant un pivotement de travail du mode de réalisation (72, 74) respectif de l'étage de transmission (2, 3, 4).

13. Transmission à variation continue (1) selon l'une quelconque des revendications précédentes, **caractérisée en ce que** l'étage de transmission (2, 3, 4) forme un premier étage de transmission (2, 3, 4), **en ce qu'**il est prévu un second étage de transmission (2, 3, 4), ledit second étage étant conçu selon l'une quelconque des revendications précédentes, et **en ce que** la came entraînée (11, 12) du premier étage de transmission (2, 3, 4) et la came d'entraînement (9, 10) du second étage de transmission (2, 3, 4) sont accouplées l'une à l'autre de manière isogonale, un axe de rotation ou de pivotement (34, 35) commun étant en particulier formé.

14. Transmission à variation continue (1) selon la revendication précédente, **caractérisée en ce que**, pour modifier un ou le rapport de démultiplication de la transmission (1), la came entraînée (11, 12) du premier étage de transmission (2, 3, 4) peut tourner par rapport à la came d'entraînement (9, 10) du second étage de transmission (2, 3, 4).

15. Procédé permettant de faire fonctionner une transmission à variation continue (1) en particulier selon l'une quelconque des revendications précédentes, **caractérisé en ce qu'**un étage de transmission (2, 3, 4) présentant une came (9, 10, 11, 12) avec un contour extérieur (15, 16, 17, 18) en forme de spirale est conçu en double, **en ce que** les deux modes de réalisation (72, 74) des étages de transmission (2, 3, 4) sont accouplés et désaccouplés de façon alternée, et **en ce que** le mode de réalisation (72, 74) de l'étage de transmission (2, 3, 4) respectivement désaccouplé est ramené dans un état initial, tandis que le mode de réalisation (72, 74) de l'étage de transmission (2, 3, 4) accouplé engendre une transmission de force sur un arbre de sortie (7, 8).
